(19) Europäisches Patentamt
European Patent Office
Office européen des brevets

(11) EP 4 791 006 A1

(12) EUROPEAN PATENT APPLICATION
published in accordance with Art. 153(4) EPC

(43) Date of publication:
**12.08.2026 Bulletin 2026/33**

(21) Application number: **24884291.6**

(22) Date of filing: **20.09.2024**

(51) International Patent Classification (IPC):
***H04N 21/242*** *(2011.01)*

(52) Cooperative Patent Classification (CPC):
**H04N 21/242; H04N 21/43**

(86) International application number:
**PCT/CN2024/119993**

(87) International publication number:
**WO 2025/092284 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.11.2023 CN 202311454220**

(71) Applicant: **HUAWEI TECHNOLOGIES CO., LTD.
Shenzhen 518129 (CN)**

(72) Inventors:
- **DOU, Fenghui
Shenzhen, Guangdong 518129 (CN)**
- **ZHANG, Yanqing
Shenzhen, Guangdong 518129 (CN)**

(74) Representative: **Körber, Martin Hans
Mitscherlich PartmbB
Karlstraße 7
80333 München (DE)**

# (54) DATA TRANSMISSION METHOD AND APPARATUS

(57) A data transmission method and an apparatus are provided, and relate to the field of communication technologies. The method includes: receiving first information, where the first information indicates a preset duration, and the preset duration corresponds to synchronization delay information between a first QoS flow and a second QoS flow; sending a first data packet, where the first data packet is transmitted by using the first QoS flow, and a moment at which the first data packet is sent by a first network device is a first moment; and sending a second data packet based on the first moment and the preset duration, where the second data packet is transmitted by using the second QoS flow, and the second data packet is associated with the first data packet. The first network device can send a synchronization data packet based on a sending moment of a reference data packet and the preset duration indicating the synchronization delay information, so that synchronization between the synchronization data packet and the reference data packet is implemented. Therefore, according to the data transmission method provided in embodiments of this application, an effect of synchronization between a plurality of data flows can be improved, so that user experience is improved.

Data transmission method 300
First network device
Third network device
S310: Obtain first information
S320: First information
S330: Send a first data packet
S340: Send a second data packet
FIG. 3

EP 4 791 006 A1

## Description

This application claims priority to Chinese Patent Application No. 202311454220.7, filed with the China National Intellectual Property Administration on November 2, 2023 and entitled "DATA TRANSMISSION METHOD AND APPARATUS", which is incorporated herein by reference in its entirety.

## TECHNICAL FIELD

This application relates to the field of communication technologies, and more specifically, to a data transmission method and an apparatus.

## BACKGROUND

In scenarios such as virtual reality (virtual reality, VR), augmented reality (augmented reality, AR), extended reality (extended reality, XR), and metaverse (metaverse), to satisfy an immersiveexperience requirement of a user, to-be-transmitted data evolves from monotonous audio or video data to data with a plurality of modalities (modalities) including audio, a video, tactility, and the like. Data with different modalities may be classified into different data flows, for example, an auditory data flow, a visual data flow, and a tactile data flow. When the plurality of modalities simultaneously exist, to avoid a problem of asynchronization between hearing, vision, and touch, data synchronization needs to be performed between these data flows.

However, how to improve an effect of data synchronization between a plurality of data flows is an urgent problem to be resolved.

## SUMMARY

This application provides a data transmission method and an apparatus, to improve an effect of data synchronization between a plurality of data flows.

According to a first aspect, a data transmission method is provided. The method may be performed by a first network device, may be performed by a component (for example, a processor, a chip, or a chip system) in the first network device, or may be performed by a logical module or software that can implement all or some functions of the first network device. The method includes: receiving first information, where the first information indicates synchronization delay information between a first quality of service (quality of service, QoS) flow and a second QoS flow; sending a first data packet at a first moment, where the first data packet is transmitted by using the first QoS flow; and sending a second data packet based on the first moment and the synchronization delay information, where the second data packet is transmitted by using the second QoS flow, and the second data packet is associated with the first data packet.

Optionally, the first network device may be an access network device. It may be understood that a moment at which the first data packet is sent by the first network device is the first moment. Optionally, the synchronization delay information between the first QoS flow and the second QoS flow corresponds to a preset duration.

Based on the foregoing solution, the first network device can send a synchronization data packet based on a sending moment of a reference data packet and the synchronization delay information. In this way, a delay between the reference data packet and the synchronization data packet can satisfy a synchronization requirement, so that synchronization between the synchronization data packet and the reference data packet is implemented. Therefore, according to the data transmission method provided in this embodiment of this application, an effect of synchronization between a plurality of data flows can be improved, so that user experience is improved.

With reference to the first aspect, in some implementations of the first aspect, the method further includes: receiving second information, where the second information is for determining an association relationship between a data packet of the first QoS flow and a data packet of the second QoS flow.

Based on the foregoing solution, the first network device may determine an association relationship between a data packet of a reference flow and a data packet of a synchronization flow based on the second information, where there is a synchronization requirement between the data packets having the association relationship. Therefore, through the foregoing solution, the first network device can identify the reference data packet and the synchronization data packet that need to be synchronized. This further improves the effect of the synchronization between the data flows, so that user experience is improved.

With reference to the first aspect, in some implementations of the first aspect, the first data packet corresponds to the second information, the second data packet corresponds to the second information, and the method further includes: when the second information corresponding to the first data packet is the same as the second information corresponding to the second data packet, determining that the second data packet is associated with the first data packet.

For example, the second information is a first identifier. When the first identifier corresponding to the first data

packet is the same as the first identifier corresponding to the second data packet, the first network device determines that the second data packet is associated with the first data packet.

Based on the foregoing solution, the first network device may determine that there is an association relationship between data packets that carry the same second information, where there is a synchronization requirement between the data packets having the association relationship. Therefore, through the foregoing solution, the first network device can identify the reference data packet and the synchronization data packet that need to be synchronized. This further improves the effect of the synchronization between the data flows, so that user experience is improved.

With reference to the first aspect, in some implementations of the first aspect, the first data packet corresponds to the second information, and the method further includes: receiving the first data packet from a second network device, where the second information further indicates that the first data packet is a synchronization reference for the data packet of the second QoS flow.

For example, the second information is a second identifier. The first network device receives the first data packet from the second network device, where the first data packet corresponds to the second identifier, and the second identifier further indicates that the first data packet is the synchronization reference for the data packet of the second QoS flow.

Based on the foregoing solution, the second information may indicate that the first data packet is used as the reference data packet for the data packet of the second QoS flow, so that the first network device can identify the reference data packet and the synchronization data packet that need to be synchronized. This further improves the effect of the synchronization between the data flows, so that user experience is improved.

With reference to the first aspect, in some implementations of the first aspect, the method further includes: when the first network device receives the second data packet from the second network device after the first network device receives the first data packet, determining that the second data packet is associated with the first data packet.

Based on the foregoing solution, the second identifier may indicate that the first data packet is used as the reference data packet for the data packet in the synchronization flow, and the first network device may determine that the data packet that is of the synchronization flow and that is received after the reference data packet is associated with the reference data packet. Through the foregoing solution, the first network device can identify the reference data packet and the synchronization data packet that need to be synchronized. This further improves the effect of the synchronization between the data flows, so that user experience is improved.

With reference to the first aspect, in some implementations of the first aspect, the second network device is a user plane function network element.

With reference to the first aspect, in some implementations of the first aspect, the second information further indicates a first duration, and the method further includes: determining the association relationship between the data packet of the first QoS flow and the data packet of the second QoS flow based on a moment at which the first network device receives the data packet of the first QoS flow, the first duration, and a moment at which the first network device receives the data packet of the second QoS flow.

Based on the foregoing solution, the first network device can determine the association relationship between the data packet in the reference flow and the data packet in the synchronization flow based on a moment at which the first network device receives the data packet in the reference flow, the first duration, and a moment at which the data packet in the synchronization flow is received. Through the foregoing solution, the first network device can identify the reference data packet and the synchronization data packet that need to be synchronized. This further improves the effect of the synchronization between the data flows, so that user experience is improved.

With reference to the first aspect, in some implementations of the first aspect, the determining the association relationship between the data packet of the first QoS flow and the data packet of the second QoS flow based on the moment at which the first network device receives the data packet of the first QoS flow, the first duration, and the moment at which the first network device receives the data packet of the second QoS flow includes: when the first network device receives the second data packet within the first duration starting from receiving the first data packet by the first network device, determining that the second data packet is associated with the first data packet.

Based on the foregoing solution, the first network device may determine that a data packet received within the first duration starting from receiving the reference data packet is the synchronization data packet, so that the first network device can identify the reference data packet and the synchronization data packet that need to be synchronized. This further improves the effect of the synchronization between the data flows, so that user experience is improved.

With reference to the first aspect, in some implementations of the first aspect, the first duration is determined based on first jitter information and/or second jitter information, the first jitter information is related to the first QoS flow, and the second jitter information is related to the second QoS flow.

Based on the foregoing solution, jitter of the first QoS flow and/or jitter of the second QoS flow are/is considered for the first duration. When a delay occurs in data packet receiving, through the solution provided in this embodiment of this application, the reference data packet and the synchronization data packet that need to be synchronized can still be accurately identified, so that applicability of the data transmission method is improved.

With reference to the first aspect, in some implementations of the first aspect, the determining the association

relationship between the data packet of the first QoS flow and the data packet of the second QoS flow based on the moment at which the first network device receives the data packet of the first QoS flow, the first duration, and the moment at which the first network device receives the data packet of the second QoS flow includes: determining a second duration based on first jitter information and/or second jitter information, and the first duration, where the first jitter information is related to the first QoS flow, and the second jitter information is related to the second QoS flow; and when the first network device receives the second data packet within the second duration starting from receiving the first data packet by the first network device, determining that the second data packet is associated with the first data packet.

Based on the foregoing solution, the first network device considers jitter of the first QoS flow and/or jitter of the second QoS flow based on the first duration, to obtain the second duration. When a delay occurs in data packet receiving, through the solution provided in this embodiment of this application, the reference data packet and the synchronization data packet that need to be synchronized can still be accurately identified, so that applicability of the data transmission method is improved.

With reference to the first aspect, in some implementations of the first aspect, the synchronization delay information between the first QoS flow and the second QoS flow corresponds to a preset duration, and the sending the second data packet based on the first moment and the synchronization delay information includes: sending the second data packet within the preset duration starting from the first moment.

Based on the foregoing solution, the first network device can send the synchronization data packet within the preset duration starting from receiving the reference data packet. In this way, the delay between the reference data packet and the synchronization data packet can satisfy the synchronization requirement, so that the synchronization between the synchronization data packet and the reference data packet is implemented. The synchronization data packet and the reference data packet respectively belong to data flows with different modalities. Therefore, according to the data transmission method provided in this embodiment of this application, the effect of the synchronization between the plurality of data flows can be improved, so that user experience is improved.

With reference to the first aspect, in some implementations of the first aspect, the first QoS flow and the second QoS flow are for transmission of at least two of data flows that are of a target service and that are with different modalities.

Based on the foregoing solution, according to the data transmission method provided in this embodiment of this application, an effect of synchronization between data flows with a plurality of modalities can be improved, so that user experience is improved.

With reference to the first aspect, in some implementations of the first aspect, the first information is carried in configuration information of the first QoS flow and/or configuration information of the second QoS flow.

Based on the foregoing solution, the first information may be carried in the configuration information of the first QoS flow and/or the configuration information of the second QoS flow. Therefore, the first network device can obtain synchronization delay information between the reference flow and the synchronization flow, so that an effect of synchronization between the reference flow and the synchronization flow is improved.

With reference to the first aspect, in some implementations of the first aspect, the first information further indicates the first network device to perform synchronization between the first QoS flow and the second QoS flow based on at least two associated data packets, and the at least two associated data packets are data packets having the association relationship in the first QoS flow and the second QoS flow.

Based on the foregoing solution, the first network device can determine, based on the first information, to perform synchronization between a plurality of QoS flows at a granularity of associated data packets. According to the method provided in this embodiment of this application, the synchronization between the plurality of QoS flows can be performed at a finer granularity, so that a synchronization effect is improved.

According to a second aspect, a data transmission method is provided. The method may be performed by a second network device, may be performed by a component (for example, a processor, a chip, or a chip system) in the second network device, or may be performed by a logical module or software that can implement all or some functions of the second network device. The method includes: obtaining second information, where the second information indicates an association relationship between a data packet of a first QoS flow and a data packet of a second QoS flow; and sending the second information to a first network device.

Optionally, the second network device may be a user plane function network element.

Based on the foregoing solution, the second network device can send the second information to the first network device, so that the first network device can determine the association relationship between the data packet of the first QoS flow and the data packet of the second QoS flow based on the second information. In this way, the first network device can identify a reference data packet and a synchronization data packet that need to be synchronized, and synchronization between a plurality of data flows is implemented.

With reference to the second aspect, in some implementations of the second aspect, a first data packet corresponds to the second information, a second data packet corresponds to the second information, and the sending the second information to the first network device includes: sending the first data packet and the second data packet to the first network device, where the first data packet is transmitted by using the first QoS flow, and the second data packet is

transmitted by using the second QoS flow.

For example, the second information is a first identifier, the first data packet corresponds to the first identifier, and the second data packet corresponds to the first identifier.

Based on the foregoing solution, the second network device may enable the data packets having the association relationship to correspond to the same second information, where there is a synchronization requirement between the data packets having the association relationship. Therefore, through the foregoing solution, the first network device can identify the reference data packet and the synchronization data packet that need to be synchronized. This further improves an effect of the synchronization between the data flows, so that user experience is improved.

With reference to the second aspect, in some implementations of the second aspect, the second information further indicates at least one data packet as a synchronization reference for the data packet of the second QoS flow, and the sending the second information to the first network device includes: sending a first data packet to the first network device, where the first data packet corresponds to the second information.

For example, the second information is a second identifier, the first data packet corresponds to the second identifier, and the second identifier indicates that the first data packet is the synchronization reference for the data packet of the second QoS flow.

Based on the foregoing solution, the second network device indicates the reference data packet by using the second information, and the reference data packet may be used as a synchronization reference for a data packet of a synchronization flow. Through the foregoing solution, the first network device can identify the reference data packet and the synchronization data packet that need to be synchronized. This further improves an effect of the synchronization between the data flows, so that user experience is improved.

With reference to the second aspect, in some implementations of the second aspect, the method further includes: receiving indication information from a third network device, where the indication information is for triggering the second network device to determine of the association relationship between the data packet of the first QoS flow and the data packet of the second QoS flow; and the obtaining the second information includes: determining the second information based on the association relationship between the data packet of the first QoS flow and the data packet of the second QoS flow.

Based on the foregoing solution, after receiving the indication information, the second network device may identify an association relationship between a data packet of a reference flow and the data packet of the synchronization flow. Therefore, the first network device can identify, by using the second information determined and delivered by the second network device, the reference data packet and the synchronization data packet that need to be synchronized. Through the foregoing solution, this further improves the effect of the synchronization between the data flows, so that user experience is improved.

With reference to the second aspect, in some implementations of the second aspect, the method further includes: receiving a target identifier from an application function network element, where the target identifier is for determining the association relationship between the data packet of the first QoS flow and the data packet of the second QoS flow.

Based on the foregoing solution, the second network device may determine the association relationship between the data packet of the reference flow and the data packet of the synchronization flow based on the target identifier, where there is a synchronization requirement between the data packets having the association relationship. Therefore, through the foregoing solution, the second network device can identify the reference data packet and the synchronization data packet that need to be synchronized. This further improves the effect of the synchronization between the data flows, so that user experience is improved.

With reference to the second aspect, in some implementations of the second aspect, the method further includes: receiving the first data packet and the second data packet from the application function network element, where the first data packet corresponds to the target identifier, and the second data packet corresponds to the target identifier; and when the target identifier corresponding to the second data packet is the same as the target identifier corresponding to the first data packet, determining that the first data packet is associated with the second data packet.

Based on the foregoing solution, the second network device may determine that there is an association relationship between data packets that carry a same identifier, where there is a synchronization requirement between the data packets having the association relationship. Therefore, through the foregoing solution, the second network device can identify the reference data packet and the synchronization data packet that need to be synchronized. This further improves the effect of the synchronization between the data flows, so that user experience is improved.

With reference to the second aspect, in some implementations of the second aspect, the target identifier further indicates the at least one data packet as the synchronization reference for the data packet of the second QoS flow, and the receiving the target identifier from the application function network element includes: receiving the first data packet, where the first data packet corresponds to the target identifier; and when the second network device receives the second data packet after the second network device receives the first data packet, determining that the second data packet is associated with the first data packet.

Based on the foregoing solution, the target identifier may indicate that the first data packet is used as the

reference data packet for the data packet of the synchronization flow, and the second network device may determine that the data packet that is of the synchronization flow and that is received after the reference data packet is associated with the reference data packet. Through the foregoing solution, the first network device can identify the reference data packet and the synchronization data packet that need to be synchronized. This further improves the effect of the synchronization between the data flows, so that user experience is improved.

With reference to the second aspect, in some implementations of the second aspect, the indication information further indicates a third duration, and the method further includes: determining the association relationship between the data packet of the first QoS flow and the data packet of the second QoS flow based on a moment at which the second network device receives the data packet of the first QoS flow, the third duration, and a moment at which the second network device receives the data packet of the second QoS flow.

Based on the foregoing solution, the second network device can determine the association relationship between the data packet in the reference flow and the data packet in the synchronization flow based on a moment at which the second network device receives the data packet in the reference flow, the third duration, and a moment at which the data packet in the synchronization flow is received. Through the foregoing solution, the second network device can identify the reference data packet and the synchronization data packet that need to be synchronized. This further improves the effect of the synchronization between the data flows, so that user experience is improved.

With reference to the second aspect, in some implementations of the second aspect, the determining the association relationship between the data packet of the first QoS flow and the data packet of the second QoS flow based on the moment at which the second network device receives the data packet of the first QoS flow, the third duration, and the moment at which the second network device receives the data packet of the second QoS flow includes: when the second network device receives the second data packet within the third duration starting from receiving the first data packet by the second network device, determining that the second data packet is associated with the first data packet.

Based on the foregoing solution, the second network device may determine that a data packet received within the third duration starting from receiving the reference data packet is the synchronization data packet, so that the second network device can identify the reference data packet and the synchronization data packet that need to be synchronized. This further improves the effect of the synchronization between the data flows, so that user experience is improved.

With reference to the second aspect, in some implementations of the second aspect, the third duration is determined based on first jitter information and/or second jitter information, the first jitter information is related to the first QoS flow, and the second jitter information is related to the second QoS flow.

Based on the foregoing solution, jitter of the first QoS flow and/or jitter of the second QoS flow are/is considered for the third duration. When a delay occurs in data packet receiving, through the solution provided in this embodiment of this application, the reference data packet and the synchronization data packet that need to be synchronized can still be accurately identified, so that applicability of the data transmission method is improved.

With reference to the second aspect, in some implementations of the second aspect, the determining the association relationship between the data packet of the first QoS flow and the data packet of the second QoS flow based on the moment at which the second network device receives the data packet of the first QoS flow, the third duration, and the moment at which the second network device receives the data packet of the second QoS flow includes: determining a fourth duration based on first jitter information and/or second jitter information, and the third duration, where the first jitter information is related to the first QoS flow, and the second jitter information is related to the second QoS flow; and when the second network device receives the second data packet within the fourth duration starting from receiving the first data packet by the second network device, determining that the second data packet is associated with the first data packet.

Based on the foregoing solution, the second network device considers jitter of the first QoS flow and/or jitter of the second QoS flow based on the third duration, to obtain the fourth duration. When a delay occurs in data packet receiving, through the solution provided in this embodiment of this application, the reference data packet and the synchronization data packet that need to be synchronized can still be accurately identified, so that applicability of the data transmission method is improved.

With reference to the second aspect, in some implementations of the second aspect, the method further includes: receiving the first data packet from an application function network element; and determining that the first data packet corresponds to a target identifier, where the target identifier indicates that the first data packet is used as a synchronization reference for the data packet of the second QoS flow; and the sending the first data packet to the first network device includes: sending the first data packet to the first network device, where the first data packet corresponds to the second information.

Based on the foregoing solution, the target identifier may indicate that the first data packet is used as the reference data packet for the data packet in the synchronization flow. When identifying that the first data packet corresponds to the target identifier, the second network device may enable the first data packet sent to the first network device to correspond to the second identifier. Therefore, through the foregoing solution, the first network device can identify the reference data packet and the synchronization data packet that need to be synchronized. This further improves the effect of the synchronization between the data flows, so that user experience is improved. In addition, the second

network device does not need to identify the reference data packet and the synchronization data packet in the foregoing solution, and data transmission efficiency is improved.

With reference to the second aspect, in some implementations of the second aspect, the first QoS flow and the second QoS flow are for transmission of at least two of data flows that are of a target service and that are with different modalities.

Based on the foregoing solution, according to the data transmission method provided in this embodiment of this application, an effect of synchronization between data flows with a plurality of modalities can be improved, so that user experience is improved.

According to a third aspect, a data transmission method is provided. The method may be performed by a third network device, may be performed by a component (for example, a processor, a chip, or a chip system) in the third network device, or may be performed by a logical module or software that can implement all or some functions of the third network device. The method includes: obtaining first information, where the first information indicates synchronization delay information between a first QoS flow and a second QoS flow; and sending the first information to a first network device.

Optionally, the third network device may be a session management network element.

Based on the foregoing solution, the third network device can obtain synchronization delay information between a reference flow and a synchronization flow, and send the synchronization delay information to the first network device, so that the first network device can send a data packet in the reference flow and a data packet in the synchronization flow based on the synchronization delay information. In this way, a delay between a reference data packet and a synchronization data packet can satisfy a synchronization requirement, so that synchronization between the synchronization data packet and the reference data packet is implemented. Therefore, according to the data transmission method provided in this embodiment of this application, an effect of synchronization between a plurality of data flows can be improved, so that user experience is improved.

With reference to the third aspect, in some implementations of the third aspect, indication information is for triggering a second network device to determine an association relationship between a data packet of the first QoS flow and a data packet of the second QoS flow, and the method further includes: sending the indication information to the second network device.

Based on the foregoing solution, the third network device may send the indication information to the second network device, so that the second network device can identify an association relationship between the data packet of the reference flow and the data packet of the synchronization flow. Through the foregoing solution, this further improves the effect of the synchronization between the data flows, so that user experience is improved.

With reference to the third aspect, in some implementations of the third aspect, the indication information further indicates a third duration, and the third duration is for determining the association relationship between the data packet of the first QoS flow and the data packet of the second QoS flow.

Based on the foregoing solution, the third network device may further indicate the third duration to the second network device by using the indication information, so that the second network device can determine the association relationship between the data packet in the reference flow and the data packet in the synchronization flow based on the third duration. Through the foregoing solution, the second network device can identify the reference data packet and the synchronization data packet that need to be synchronized. This further improves the effect of the synchronization between the data flows, so that user experience is improved.

With reference to the third aspect, in some implementations of the third aspect, the method further includes: receiving third information from an application function network element, where the third information indicates a fifth duration; and determining the third duration based on first jitter information and/or second jitter information, and the fifth duration, where the first jitter information is related to the first QoS flow, and the second jitter information is related to the second QoS flow.

Based on the foregoing solution, jitter of the first QoS flow and/or jitter of the second QoS flow are/is considered for the third duration. When a delay occurs in data packet receiving, through the solution provided in this embodiment of this application, the reference data packet and the synchronization data packet that need to be synchronized can still be accurately identified, so that applicability of the data transmission method is improved.

With reference to the third aspect, in some implementations of the third aspect, second information indicates a first duration, the first duration is for determining the association relationship between the data packet of the first QoS flow and the data packet of the second QoS flow, and the method further includes: sending the second information to the first network device.

Based on the foregoing solution, the third network device can indicate the first duration to the first network device by using the second information, so that the first network device can determine the association relationship between the data packet in the reference flow and the data packet in the synchronization flow based on the first duration. Through the foregoing solution, the first network device can identify the reference data packet and the synchronization data packet that need to be synchronized. This further improves the effect of the synchronization between the data flows, so that user experience is improved.

With reference to the third aspect, in some implementations of the third aspect, the method further includes: receiving third information from an application function network element, where the third information indicates a fifth duration; and determining the first duration based on first jitter information and/or second jitter information, and the fifth duration, where the first jitter information is related to the first QoS flow, and the second jitter information is related to the second QoS flow.

Based on the foregoing solution, the third network device may consider jitter of the first QoS flow and/or jitter of the second QoS flow based on the fifth duration indicated by the application function network element, to obtain the first duration. When a delay occurs in data packet receiving, through the solution provided in this embodiment of this application, the reference data packet and the synchronization data packet that need to be synchronized can still be accurately identified, so that applicability of the data transmission method is improved.

With reference to the third aspect, in some implementations of the third aspect, the method further includes: receiving fourth information from the second network device, where the fourth information indicates the first jitter information and/or the second jitter information.

Based on the foregoing solution, the third network device may obtain the first jitter information and/or the second jitter information from the second network device, so that the jitter of the first QoS flow and/or the jitter of the second QoS flow are/is considered based on the fifth duration indicated by the application function network element, to obtain the first duration. When the delay occurs in data packet receiving, through the solution provided in this embodiment of this application, the reference data packet and the synchronization data packet that need to be synchronized can still be accurately identified, so that the applicability of the data transmission method is improved.

With reference to the third aspect, in some implementations of the third aspect, the first QoS flow and the second QoS flow are for transmission of at least two of data flows that are of a target service and that are with different modalities.

Based on the foregoing solution, according to the data transmission method provided in this embodiment of this application, an effect of synchronization between data flows with a plurality of modalities can be improved, so that user experience is improved.

With reference to the third aspect, in some implementations of the third aspect, the first information is carried in configuration information of the first QoS flow and/or configuration information of the second QoS flow.

Based on the foregoing solution, the first information may be carried in the configuration information of the first QoS flow and/or the configuration information of the second QoS flow. Therefore, the third network device can indicate the synchronization delay information between the reference flow and the synchronization flow to the first network device, so that an effect of synchronization between the reference flow and the synchronization flow is improved.

With reference to the third aspect, in some implementations of the third aspect, the first information further indicates the first network device to perform synchronization between the first QoS flow and the second QoS flow based on at least two associated data packets, and the at least two associated data packets are data packets having the association relationship in the first QoS flow and the second QoS flow.

Based on the foregoing solution, the first network device can determine, based on the first information, to perform synchronization between a plurality of QoS flows at a granularity of associated data packets. According to the method provided in this embodiment of this application, the synchronization between the plurality of QoS flows can be performed at a finer granularity, so that a synchronization effect is improved.

According to a fourth aspect, a communication apparatus is provided, and includes a processor. The processor is configured to execute a computer program or instructions or use a processing circuit to cause the communication apparatus to perform the method according to any one of the first aspect or the possible implementations of the first aspect, cause the communication apparatus to perform the method according to any one of the second aspect or the possible implementations of the second aspect, or cause the communication apparatus to perform the method according to any one of the third aspect or the possible implementations of the third aspect.

In a possible implementation, the communication apparatus further includes a memory, configured to store the computer program or the instructions. Further, the processor is specifically configured to invoke and run the computer program or the computer instructions stored in the memory, so that the processor implements any one of the implementations of the first aspect, the second aspect, or the third aspect.

In a possible implementation, the communication apparatus further includes a transceiver (which may also be referred to as a communication interface), and the transceiver is configured to input and/or output a signal through the communication interface. The processor is configured to control the transceiver to receive and send signals.

According to a fifth aspect, a communication apparatus is provided, and includes a processing circuit (which may also be referred to as a processor) and an input/output interface (which may also be referred to as an interface circuit). The input/output interface is configured to input and/or output a signal. The processing circuit is configured to perform the method according to any one of the first aspect or the possible implementations of the first aspect, the processing circuit is configured to perform the method according to any one of the second aspect or the possible implementations of the second aspect, or the processing circuit is configured to perform the method according to any one of the third aspect or the possible implementations of the third aspect.

In a possible implementation, the processor is configured to: communicate with another apparatus through the interface circuit, and perform the method in any one of the implementations of the first aspect, the second aspect, or the third aspect. There are one or more processors.

According to a sixth aspect, a communication apparatus is provided. The communication apparatus may be a first network device, or may be a device, a module, or the like configured to perform a function of the first network device. The communication apparatus may be a second network device, or may be a device, a module, or the like configured to perform a function of the second network device. The communication apparatus may be a third network device, or may be a device, a module, or the like configured to perform a function of the third network device.

In a possible implementation, the communication apparatus may include modules or units that are in one-to-one correspondence with the method/operations/steps/actions described in the first aspect. The module or unit may be a hardware circuit, may be software, or may be implemented by a combination of the hardware circuit and the software.

In another possible implementation, the communication apparatus may include modules or units that are in one-to-one correspondence with the method/operations/steps/actions described in the second aspect. The module or unit may be a hardware circuit, may be software, or may be implemented by a combination of the hardware circuit and the software.

In still another possible implementation, the communication apparatus may include modules or units that are in one-to-one correspondence with the method/operations/steps/actions described in the third aspect. The module or unit may be a hardware circuit, may be software, or may be implemented by a combination of the hardware circuit and the software.

According to a seventh aspect, a computer-readable storage medium is provided. The computer-readable storage medium stores a computer program or instructions. When the computer program or the instructions are run on a computer, the method according to any one of the first aspect or the possible implementations of the first aspect is caused to be performed, the method according to any one of the second aspect or the possible implementations of the second aspect is caused to be performed, or the method according to any one of the third aspect or the possible implementations of the third aspect is caused to be performed.

According to an eighth aspect, a computer program product is provided, and includes a computer program or instructions. When the computer program or the instructions are run on a computer, the method according to any one of the first aspect or the possible implementations of the first aspect is caused to be performed, the method according to any one of the second aspect or the possible implementations of the second aspect is caused to be performed, or the method according to any one of the third aspect or the possible implementations of the third aspect is caused to be performed.

According to a ninth aspect, a communication apparatus is provided, and includes a processor, configured to connect to a memory, and configured to invoke a program stored in the memory, to perform the method in any one of the possible implementations of the first aspect, the second aspect, or the third aspect. The memory may be located inside the communication apparatus, or may be located outside the communication apparatus. In addition, there are one or more processors.

In an implementation, the communication apparatus in the fourth aspect, the fifth aspect, or the sixth aspect may be a chip or a chip system.

According to a tenth aspect, a chip apparatus is provided, and includes a processor, configured to invoke a computer program or computer instructions in a memory, to cause the processor to perform any one of the implementations of the first aspect, the second aspect, or the third aspect.

Optionally, the processor is coupled to the memory through an interface.

According to an eleventh aspect, a communication system is provided. The communication system includes a first network device, a second network device, and a third network device. The first network device is configured to perform the method shown in the first aspect, the second network device is configured to perform the method shown in the second aspect, and the third network device is configured to perform the method shown in the third aspect.

For descriptions of beneficial effects of any one of the fourth aspect to the eleventh aspect, refer to the descriptions of the beneficial effects of the first aspect or the second aspect.

## BRIEF DESCRIPTION OF DRAWINGS

FIG. 1 is a diagram of a network architecture of a communication system to which an embodiment of this application is applicable;
FIG. 2 is a diagram of data transmission;
FIG. 3 is a schematic flowchart of a data transmission method according to an embodiment of this application;
FIG. 4 is a diagram of a data transmission method according to an embodiment of this application;
FIG. 5 is a schematic flowchart of another data transmission method according to an embodiment of this application;
FIG. 6 is a diagram of a method for associating data packets of different data flows according to an embodiment of this

application;

FIG. 7 is a schematic flowchart of still another data transmission method according to an embodiment of this application;

FIG. 8 is a schematic block diagram of a communication apparatus according to an embodiment of this application;

FIG. 9 is a schematic block diagram of another communication apparatus according to an embodiment of this application;

FIG. 10 is a schematic block diagram of still another communication apparatus according to an embodiment of this application; and

FIG. 11 is a schematic block diagram of yet another communication apparatus according to an embodiment of this application.

## DESCRIPTION OF EMBODIMENTS

The following describes technical solutions in this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

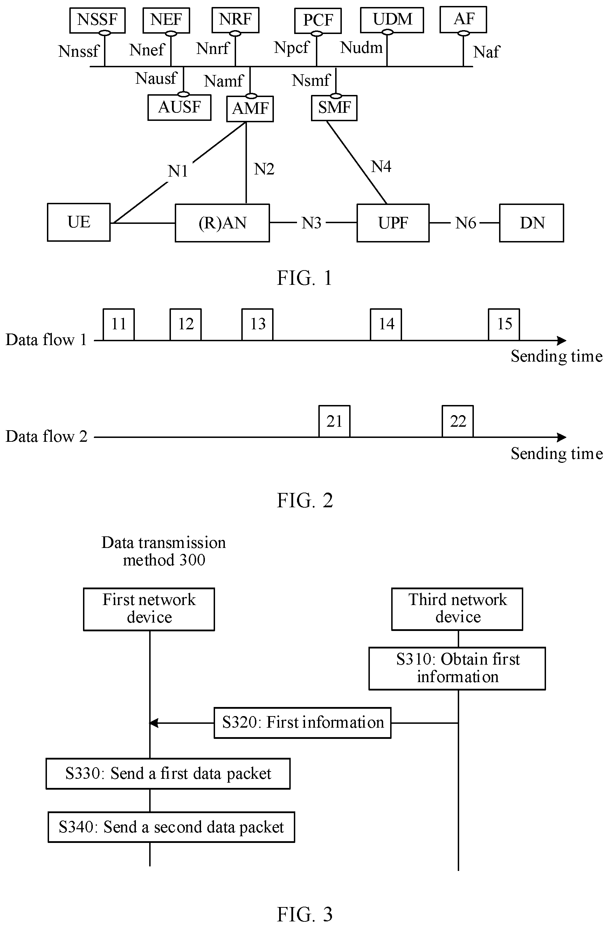

FIG. 1 is a diagram of a network architecture of a communication system to which an embodiment of this application is applicable. The network architecture includes a terminal device, an access network device, an access and mobility management network element, a session management network element, a user plane function network element, a policy control network element, a network slice selection network element, a network repository function network element, a network data analytics network element, a unified data management network element, a unified data repository network element, an authentication service function network element, a network capability exposure network element, an application function network element, and a data network (data network, DN) connected to an operator network. The terminal device may send service data to the data network and receive service data from the data network via the access network device and the user plane function network element.

The terminal device is a device having a wireless transceiver function; and may be deployed on land and includes an indoor or outdoor device, a handheld device, a wearable device, or a vehicle-mounted device, may be deployed on water (for example, a ship), or may be deployed in the air (for example, an airplane, a balloon, and a satellite). The terminal device may communicate with a core network through a radio access network (radio access network, RAN), and exchange a voice and/or data with the RAN. The terminal device may be a mobile phone (mobile phone), a tablet (Pad), a computer having a wireless transceiver function, a mobile internet device (mobile internet device, MID), a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in a remote medical (remote medical), a wireless terminal in a smart grid (smart grid), a wireless terminal in transportation safety (transportation safety), a wireless terminal in a smart city (smart city), a wireless terminal in a smart home (smart home), an uncrewed aerial vehicle, an uncrewed aerial vehicle controller, or the like. An application scenario is not limited in embodiments of this application. The terminal device may also be sometimes referred to as user equipment (user equipment, UE), a mobile station, a remote station, or the like. A specific technology, a device form, and a name that are used for the terminal device are not limited in embodiments of this application.

The access network device is a device that is in a network and that is configured to enable the terminal device to access a wireless network. The access network device may be a node in the radio access network, may also be referred to as a base station, and may also be referred to as a radio access network ((radio) access network, (R)AN) node (or device). In addition, the (R) AN may also be equivalent to a next generation radio access network (next generation radio access network, NG-RAN) in a layer 3 relay (relay) architecture. In other words, the (R) AN may be the NG-RAN. For ease of description, the RAN is sometimes for representing the access network device below. It may be understood that the RAN may alternatively be the AN.

The access network device may include an evolved NodeB (NodeB, eNB, or eNodeB, evolved NodeB) in a long term evolution (long term evolution, LTE) system or an LTE-advanced (LTE-Advanced, LTE-A) system, for example, a conventional macro base station eNB and a micro base station eNB in a heterogeneous network scenario, may include a next generation NodeB (next generation NodeB, gNB) in a 5G or NR system, may include a radio network controller (radio network controller, RNC), a NodeB (NodeB, NB), a base station controller (base station controller, BSC), a base

transceiver station (base transceiver station, BTS), a transmission reception point (transmission reception point, TRP), a home base station (for example, a home evolved NodeB or a home NodeB, HNB), a base band unit (base band unit, BBU), a baseband pool BBU pool, a Wi-Fi access point (access point, AP), or the like, or may include a central unit (central unit, CU) and a distributed unit (distributed unit, DU) in a cloud access network (cloud radio access network, CloudRAN) system. This is not limited in embodiments of this application. In a split deployment scenario in which the access network device includes the CU and the DU, the CU supports protocols such as a radio resource control (radio resource control, RRC) protocol, a packet data convergence protocol (packet data convergence protocol, PDCP), and a service data adaptation protocol (service data adaptation protocol, SDAP), and the DU mainly supports a radio link control (radio link control, RLC) layer protocol, a medium access control (medium access control, MAC) layer protocol, and a physical layer protocol.

The access and mobility management network element is mainly for attachment and a tracking area update procedure of the terminal in a mobile network. The access and mobility management network element may provide a non-access stratum (non-access stratum, NAS) message, complete registration management, connection management, reachability management, tracking area list (tracking area list, TA list) allocation, lawful interception, access authorization, authentication, mobility management, and the like, and transparently route a session management (session management, SM) message to the session management network element. In the 5th generation (5th generation, 5G) communication system, the access and mobility management network element may be an access and mobility management function (access and mobility management function, AMF). In a future communication system (for example, a 6G communication system), the mobility management network element may still be an AMF network element, or may have another name. This is not limited in this application.

The session management network element is mainly for session and bearer management in the mobile network, for example, session establishment, modification, and release. Specific functions are, for example, allocating an internet protocol (internet protocol, IP) address to the terminal and selecting a user plane function network element that provides a packet forwarding function. In the 5G communication system, the session management network element may be a session management function (session management function, SMF). In the future communication system (for example, the 6G communication system), the session management network element may still be an SMF network element, or may have another name. This is not limited in this application.

The user plane function network element is mainly configured to process a user packet, where the processing is, for example, forwarding, charging, or lawful interception. In addition, the user plane function network element may be for functions such as routing and forwarding of user plane data, threshold control, traffic monitoring, and verification. The user plane function network element may be further configured to: manage a UE IP address, manage core network (core network, CN) tunnel information, and so on. The user plane function network element may also be referred to as a protocol data unit (protocol data unit, PDU) session anchor (PDU session anchor, PSA). In the 5G communication system, the user plane function network element may be a user plane function (user plane function, UPF). In the future communication system (for example, the 6G communication system), the user plane function network element may still be a UPF network element, or may have another name. This is not limited in this application.

The policy control network element includes a user subscription data management function, a policy control function, a charging policy control function, QoS control, and the like. In the 5G communication system, the policy control network element may be a policy control function (policy control function, PCF). In the future communication system (for example, the 6G communication system), the policy control network element may still be a PCF network element, or may have another name. This is not limited in this application.

A network slice selection function network element is mainly configured to select an appropriate network slice for a service of the terminal device. In the 5G communication system, the network slice selection network element may be a network slice selection function (network slice selection function, NSSF) network element. In the future communication system (for example, the 6G communication system), the network slice selection network element may still be an NSSF network element, or may have another name. This is not limited in this application.

The network repository function network element is mainly configured to provide registration and discovery functions of a network element or a service provided by the network element. In the 5G communication system, the network repository function network element may be a network repository function (network repository function, NRF). In the future communication system (for example, the 6G communication system), the network repository function network element may still be an NRF network element, or may have another name. This is not limited in this application.

The network data analytics network element may collect data from each network function (network function, NF), for example, the policy control network element, the session management network element, the user plane function network element, the access and mobility management network element, and the application function network element (via a network exposure function network element), and perform analysis and prediction. In the 5G communication system, the network data analytics network element may be a network data analytics function (network data analytics function, NWDAF). In the future communication system (for example, the 6G communication system), the network data analytics network element may still be an NWDAF network element, or may have another name. This is not limited in this application.

The unified data management network element is mainly configured to manage subscription information of the terminal device. In the 5G communication system, the unified data management network element may be a unified data management (unified data management, UDM). In the future communication system (for example, the 6G communication system), the unified data management network element may still be a UDM network element, or may have another name. This is not limited in this application.

The unified data repository network element is mainly configured to store structured data information, including subscription information, policy information, and network data or service data defined in a standard format. In the 5G communication system, the unified data repository network element may be a unified data repository (unified data repository, UDR). In the future communication system (for example, the 6G communication system), the unified data repository network element may still be a UDR network element, or may have another name. This is not limited in this application.

The authentication service function network element is mainly configured to perform security authentication on the terminal device. In the 5G communication system, the authentication service function network element may be an authentication server function (authentication server function, AUSF). In the future communication system (for example, the 6G communication system), the authentication service function network element may still be an AUSF network element, or may have another name. This is not limited in this application.

The network capability exposure network element may expose some functions of the network to an application in a controlled manner. In the 5G communication system, the network capability exposure network element may be a network exposure function (network exposure function, NEF). In the future communication system (for example, the 6G communication system), the network capability exposure network element may still be an NEF network element, or may have another name. This is not limited in this application.

The application function network element may provide service data of various applications for a control plane network element in a communication network of an operator, or obtain data information and control information of the network from the control plane network element in the communication network. In the 5G communication system, the application function network element may be an application function (application function, AF). In the future communication system (for example, the 6G communication system), the application function network element may still be an AF network element, or may have another name. This is not limited in this application. For example, the application function network element may also be referred to as an application server or a service server. In addition, the application function network element may be deployed by the operator network, or may be deployed by a third party.

The data network is mainly for providing a data transmission service for the terminal device. The data network may be a private network, for example, a local area network, may be a public data network (public data network, PDN), for example, an internet (Internet), or may be a dedicated network jointly deployed by operators, for example, a dedicated network deployed to configure an IP multimedia network subsystem (IP multimedia core network subsystem, IMS) service. The data network may alternatively be from the third party.

In the architecture shown in FIG. 1, names and functions of interfaces between the network elements are as follows:

1. N1 is an interface between the AMF and the UE, and may be configured to transfer a QoS control rule or the like to the UE.
2. N2 is an interface between the AMF and the (R)AN, and may be configured to transfer radio bearer control information or the like from a core network side to the RAN.
3. N3 is an interface between the RAN and the UPF, and is configured to transfer uplink and downlink user plane data between the RAN and the UPF.
4. N4 is an interface between the SMF and the UPF, and may be configured to transfer information between a control plane and a user plane, including delivering of a forwarding rule, a QoS control rule, a traffic statistics collection rule, or the like from the control plane to the user plane, and information reporting by the user plane.
5. N6 is an interface between the UPF and the DN, and is configured to transfer an uplink or downlink user data flow between the UPF and the DN.
6. Service-oriented interfaces Nnssf, Nnef, Nausf, Nnrf, Namf, Npcf, Nsmf, and Nudm are respectively service-oriented interfaces provided by the NSSF network element, the NEF network element, the AUSF network element, the NRF network element, the AMF network element, the PCF network element, the SMF network element, and the UDM network element, and are configured to invoke corresponding service-oriented operations.

It should be understood that the foregoing network elements or functions may be network elements in a hardware device, software functions running on dedicated hardware, or virtualized functions instantiated on a platform (for example, a cloud platform). Optionally, the foregoing network elements or functions may be implemented by one device, may be jointly implemented by a plurality of devices, or may be a functional module in a device. This is not specifically limited in embodiments of this application. Optionally, the foregoing network elements may be specific network elements in a 5G

core network in the layer 3 relay architecture.

It should be further understood that the foregoing names are defined merely for ease of distinguishing between different functions, and should not constitute any limitation on this application. This application does not exclude a possibility that another name is used in a 5G network and another future network. For example, in a 6G network, some or all of the foregoing networks may still use terms in 5G, or may use other names. The names of the interfaces between the network elements in FIG. 1 is merely an example. During specific implementation, the names of the interfaces may be other names. This is not specifically limited in this application. In addition, names of messages (or signaling) transmitted between the foregoing network elements are merely an example, and do not constitute any limitation on functions of the messages.

It should be noted that the foregoing "network element" may also be referred to as an entity, a device, an apparatus, a module, or the like, and there is no particular limitation in this application. In addition, in this application, for ease of understanding and description, descriptions of the "network element" are omitted in some descriptions. For example, the PCF network element is referred to as the PCF for short. In this case, the "PCF" should be understood as the PCF network element or a PCF entity. Descriptions of same or similar cases are omitted below.

As described above, how to improve an effect of data synchronization between data flows with a plurality of modalities is an urgent problem to be resolved. For example, an application function network element may provide synchronization requirements of service data flows (service data flows, SDFs) with the plurality of modalities, as shown in Table 1.

Table 1

| | | |
|---|---|---|
| Hearing-Vision | The hearing is delayed relative to the vision | The vision is delayed relative to the hearing |
| | 20 milliseconds (ms) | 20 ms |
| Hearing-Touch | The hearing is delayed relative to the touch | The touch is delayed relative to the hearing |
| | 25 ms | 12 ms |
| Vision-Touch | The vision is delayed relative to the touch | The touch is delayed relative to the vision |
| | 20 ms | 30 ms |

Refer to Table 1. For the hearing and the vision, when a RAN first sends visual data, sending of auditory data associated with the visual data needs to be completed within 20 ms after the visual data is sent. When a RAN first sends auditory data, sending of visual data associated with the auditory data also needs to be completed within 20 ms after the auditory data is sent. For the hearing and the touch, when a RAN first sends tactile data, sending of auditory data associated with the tactile data needs to be completed within 25 ms after the tactile data is sent. When a RAN first sends auditory data, sending of tactile data associated with the auditory data needs to be completed within 12 ms after the auditory data is sent. For the vision and the touch, when a RAN first sends tactile data, sending of visual data associated with the tactile data needs to be completed within 20 ms after the tactile data is sent. When a RAN first sends visual data, sending of tactile data associated with the visual data needs to be completed within 30 ms after the visual data is sent.

If sending completion is later than the foregoing threshold, it is considered that data of SDFs with two modalities corresponding to the threshold is not synchronized. For example, for the hearing and the vision, if the auditory data associated with the visual data is sent, when the visual data is sent first, after 20 ms after the visual data is sent, a user may perceive that the vision and the hearing are not synchronized, which degrades viewing experience. It should be noted that synchronization requirements provided by the application function network element are not limited to the foregoing Table 1. For example, a requirement may alternatively be that touch is delayed relative to vision by no more than 5 ms.

Data included in a data flow is represented in a form of a data packet below. For example, the data packet in this application may be a protocol data unit (protocol data unit, PDU)-based data packet (for example, one PDU may refer to one IP packet), or may be based on a set (PDU set) including one or more PDUs. This is not specifically limited in this application. The PDU set may refer to a payload for carrying an information unit generated at an application layer. For example, the PDU set may be one or more frames or one or more video slices for an XR service.

In addition, data flows may be classified by using a triplet, a quintuple, an application identifier, or the like. For example, when the data flows are classified by using the triplet, data packets that have a same protocol type, a same local IP address, and a same local port (or a same destination IP address and a same destination port) are classified into a same data flow. For another example, when the data flows are classified by using the quintuple, data packets that have a same protocol type, a same local IP address, a same local port, a same destination IP address, and a same destination port are classified into a same data flow. For still another example, when the data flows are classified by using the application identifier, data packets that have a same application identifier are classified into a same data flow.

However, a synchronization requirement at a granularity of the data flow cannot reflect information about a data

packet that really has a synchronization requirement in the data flow, and therefore precise synchronization cannot be implemented. For example, for one or more data packets in a visual data flow, which data packets in a tactile data flow are associated with which data packets in the visual data flow is unclear. This is described in detail by using FIG. 2 as an example below.

FIG. 2 is a diagram of data transmission.

Refer to FIG. 2. A data flow 1 and a data flow 2 may belong to different modalities. There is a data packet 11 to a data packet 15 in the data flow 1, and there is a data packet 21 and a data packet 22 in the data flow 2. A horizontal axis represents time at which a RAN sends a data packet. The further to the right, the later the sending time of the data packet.

The data packet 11 to the data packet 13 in the data flow 1 first arrive at the RAN, and the data packet 21 of the data flow 2 arrives at the RAN later. In other words, the RAN first sends the data packet 11 to the data packet 13 in the data flow 1, and sends the data packet 21 of the data flow 2 later. If the foregoing solution at the granularity of the data flow is used, the RAN sends only a synchronization requirement that is from an application function network element and that is at the granularity of the data flow, does not know which one of the data packet 11 to the data packet 13 is a data packet with which the data packet 21 needs to be synchronized, and therefore cannot accurately determine a transmission delay of the data packet 21.

For example, the data flow 1 is a tactile data flow, and the data flow 2 is a visual data flow. If the data packet 21 needs to be synchronized with the data packet 11 (that is, the data packet 11 is a tactile data packet associated with the visual data packet 21), but the RAN sends the data packet 21 by using sending time of the data packet 12 or the data packet 13 as a reference, sending time of the data packet 21 is later, and a synchronization requirement may not be satisfied. Consequently, a user perceives that touch is not synchronized with vision. In other words, the data packet 21 is used as a synchronization data packet, and the data packet 11 is used as a reference data packet. If the RAN incorrectly determines the data packet 12 or the data packet 13 as the reference data packet, the synchronization requirement may not be satisfied. Hereinafter, a data flow for transmission of the reference data packet is referred to as a reference flow, and a data flow for transmission of the synchronization data packet is referred to as a synchronization flow. It may be understood that, when some data packets transmitted in a data flow are reference data packets, and some other data packets transmitted in the data flow are synchronization data packets, the data flow is used as the reference flow during transmission of the reference data packets, and is used as the synchronization flow during transmission of the synchronization data packets. Alternatively, the data flow is always referred to as the reference flow, but a data packet in the data flow is sometimes used as the reference data packet and sometimes used as the synchronization data packet. Transmission of the synchronization data packet is performed by using the reference data packet as a reference.

The foregoing solution causes asynchronization between a plurality of data flows, and user experience is poor.

FIG. 3 is a schematic flowchart of a data transmission method 300 according to an embodiment of this application. According to the method 300, an effect of data synchronization between a plurality of data flows can be improved. The following describes the embodiment of the method 300 with reference to FIG. 3.

S310: A third network device obtains first information, where the first information indicates synchronization delay information between a first QoS flow and a second QoS flow.

For example, a first network device may be an access network device, and the third network device may be a session management network element.

The synchronization delay information may be a manifestation of a synchronization requirement. The synchronization delay information between the first QoS flow and the second QoS flow may correspond to a preset duration. A specific value of the preset duration is not limited in this application. With reference to the foregoing Table 1, when the first QoS flow is a visual flow, and the second QoS flow is an auditory flow, the value of the preset duration may be 20 ms. However, the value of the preset duration may alternatively not be selected based on Table 1. For example, the preset duration may be any value.

The first information may directly indicate the preset duration. The first information may alternatively include or carry information about the preset duration, and the preset duration is indicated by using the information about the preset duration. In other words, the information about the preset duration may be carried in the first information.

It should be understood that the synchronization delay information between the first QoS flow and the second QoS flow may be understood as that there is a synchronization requirement between the first QoS flow and the second QoS flow. For example, the synchronization delay information may be represented by using a synchronization delay budget (synchronization delay budget, SyncDB), and the preset duration may correspond to a value of the SyncDB. The synchronization delay information may alternatively be represented by using another name. This is not limited in this application. For example, the synchronization delay information may be represented by using the another name like a delay budget, a delay difference, a synchronization delay difference, a sending time difference, or a time difference of arrival. Further, the synchronization delay information may also be understood as synchronization delay information between data packets having an association relationship in the first QoS flow and the second QoS flow.

In an example, the first information may indicate only the preset duration. In this way, the first network device may determine, based on another piece of information, that there is an association relationship or a synchronization

requirement between the first QoS flow and the second QoS flow. Therefore, the first network device may determine, based on the first information and the another piece of information, that the synchronization delay information between the first QoS flow and the second QoS flow is the preset duration. For example, the first information indicates that the value of the preset duration is 20 ms, and the another piece of information indicates that the first QoS flow is associated with the second QoS flow or there is a synchronization requirement between the first QoS flow and the second QoS flow. In this case, the first network device may determine that the synchronization delay information between the first QoS flow and the second QoS flow is 20 ms. That there is an association relationship between the first QoS flow and the second QoS flow may alternatively be understood as that there is a synchronization requirement between the first QoS flow and the second QoS flow.

In another example, the first information may further indicate the synchronization delay information between the first QoS flow and the second QoS flow. In other words, the first network device may determine, based only on the first information, that the synchronization delay information between the first QoS flow and the second QoS flow is the preset duration. For example, the first information may be (20 ms, first QoS flow, second QoS flow). In this case, the first network device may determine, based on the first information, that the synchronization delay information between the first QoS flow and the second QoS flow is 20 ms. For another example, the first information may indirectly indicate, in another manner, that the second QoS flow is related to the first QoS flow (for example, the first information is carried in configuration information of the first QoS flow), and indicate the first QoS flow and the preset duration. In this case, the first network device may determine the synchronization delay information between the first QoS flow and the second QoS flow based on the first information.

Optionally, in some other implementation scenarios of the foregoing embodiment, the first information further indicates to perform synchronization between the first QoS flow and the second QoS flow based on at least two associated data packets, and the at least two associated data packets are data packets having the association relationship in the first QoS flow and the second QoS flow. It may be understood that, in this case, the first information further indicates that the synchronization between the first QoS flow and the second QoS flow is performed at a granularity of the packets.

S320: The first network device receives the first information. Accordingly, the third network device sends the first information to the first network device.

The third network device may directly send the first information to the first network device. Alternatively, the third network device may send the first information to another network device, and the another network device sends the first information to the first network device.

Optionally, in some other implementation scenarios of the foregoing embodiment, the first information is carried in the configuration information of the first QoS flow and/or configuration information of the second QoS flow. For example, the configuration information may be a QoS profile (profile). Alternatively, the first information is carried in an N2 message sent by the third network device to the first network device. The third network device may directly send the N2 message to the first network device. Alternatively, the third network device may send the N2 message to another network device, and the another network device sends the N2 message to the first network device.

For example, the first information may be carried in the configuration information of the first QoS flow, and the first information may be "20 ms->an identifier of the second QoS flow", where "->" may represent "corresponding to", "relative to (to)", or "based on". In this case, the first network device may determine that the synchronization delay information between the first QoS flow and the second QoS flow is 20 ms. In other words, the first QoS flow has a synchronization requirement relative to the second QoS flow, where the second QoS flow may be considered as a reference data flow, and the first QoS flow may be considered as a synchronization data flow. Alternatively, the second QoS flow has a synchronization requirement relative to the first QoS flow, where the first QoS flow may be considered as a reference data flow, and the second QoS flow may be considered as a synchronization data flow.

For another example, the first information may be carried in the configuration information of the second QoS flow, and the first information may be "20 ms->an identifier of the first QoS flow". In this case, the first network device may determine that the synchronization delay information between the second QoS flow and the first QoS flow is 20 ms. In other words, the second QoS flow has a synchronization requirement relative to the first QoS flow, where the first QoS flow may be considered as a reference data flow, and the second QoS flow may be considered as a synchronization data flow. Alternatively, the first QoS flow has a synchronization requirement relative to the second QoS flow, where the second QoS flow may be considered as a reference data flow, and the first QoS flow may be considered as a synchronization data flow.

The requirement in the first two examples may be understood as a "unidirectional requirement". That is, one of QoS flows has a synchronization requirement relative to the other QoS flow, and the other QoS flow has no synchronization requirement relative to the QoS flow. For example, a tactile flow has a synchronization requirement relative to a visual flow, but the visual flow has no synchronization requirement relative to the tactile flow. However, this is not limited in this application. For example, requirements may alternatively be "bidirectional requirements". That is, two QoS flows both have synchronization requirements relative to each other. For example, a tactile flow has a synchronization requirement relative to a visual flow, but the visual flow also has a synchronization requirement relative to the tactile flow.

In a case of the "bidirectional requirements", it may be understood as that the first information includes two parts.

One of the parts is a synchronization requirement of one QoS flow relative to the other QoS flow, and the other part is a synchronization requirement of the other QoS flow relative to the QoS. Corresponding preset durations may include two durations.

In the case of the "bidirectional requirement", a manner of configuring the first information may be using the configuration information of the first QoS flow or the configuration information of the second QoS flow to carry the first information, or another manner may be using the configuration information of the first QoS flow and the configuration information of the second QoS flow to carry the first information. In the 1st manner, the first information may be carried in the configuration information of the first QoS flow. For example, if the first information is "20 ms->the identifier of the second QoS flow, and the identifier of the second QoS flow->10 ms", it indicates: A synchronization requirement of the second QoS flow relative to the first QoS flow is 20 ms, and a synchronization requirement of the first QoS flow relative to the second QoS flow is 10 ms; or a synchronization requirement of the first QoS flow relative to the second QoS flow is 20 ms, and a synchronization requirement of the second QoS flow relative to the first QoS flow is 10 ms. In the 1st manner, the first information may alternatively be carried in the configuration information of the second QoS flow. For example, if the first information is "20 ms->the identifier of the first QoS flow, and the identifier of the first QoS flow->10 ms", it indicates: A synchronization requirement of the first QoS flow relative to the second QoS flow is 20 ms, and a synchronization requirement of the second QoS flow relative to the first QoS flow is 10 ms; or a synchronization requirement of the second QoS flow relative to the first QoS flow is 20 ms, and a synchronization requirement of the first QoS flow relative to the second QoS flow is 10 ms.

The another manner of the "bidirectional requirements" may be using the configuration information of the first QoS flow and the configuration information of the second QoS flow to carry the first information. It should be understood that the first information includes the two parts. One of the parts may be configured in the configuration information of the first QoS flow, and the other part may be configured in the configuration information of the second QoS flow. For example, the part that is of the first information and that is carried in the configuration information of the first QoS flow may be "20 ms->the identifier of the second QoS flow", and the other part that is of the first information and that is carried in the configuration information of the second QoS flow may be "20 ms->the identifier of the first QoS flow". In this way, the first QoS flow has a synchronization requirement relative to the second QoS flow, the second QoS flow also has a synchronization requirement relative to the first QoS flow, and the first QoS flow and the second QoS flow are reference data flows and synchronization data flows relative to each other.

The configuration information may be configuration information in the QoS profile (profile), or may be configuration information in another form. For example, the configuration information may be the N2 message sent by the third network device to the first network device. The third network device may directly send the N2 message to the first network device. Alternatively, the third network device may send the N2 message to the another network device, and the another network device sends the N2 message to the first network device.

Based on the foregoing solution, the first information may be carried in the configuration information of the first QoS flow and/or the configuration information of the second QoS flow. Therefore, the first network device can obtain synchronization delay information between the reference flow and the synchronization flow, so that an effect of synchronization between the reference flow and the synchronization flow is improved.

It should be noted that, in this application, the first information is not limited to being carried in the configuration information. For example, the first information may alternatively be carried in other information.

Optionally, in some other implementation scenarios of the foregoing embodiment, the first information further indicates the first network device to perform synchronization between the first QoS flow and the second QoS flow based on at least two associated data packets, and the at least two associated data packets are data packets having the association relationship in the first QoS flow and the second QoS flow.

Based on the indication of the first information, the first network device needs to identify the association relationship between a data packet of the first QoS flow and a data packet of the second QoS flow, and then applies the synchronization requirement between the first QoS flow and the second QoS flow to transmission of the data packets having the association relationship between the first QoS flow and the second QoS flow. For transmission of data packets having no association relationship in the first QoS flow and the second QoS flow, the synchronization requirement between the first QoS flow and the second QoS flow may not need to be considered. That is, in a transmission process, transmission only needs to be performed based on packet delay budgets (packet delay budgets, PDBs) or PDU set delay budgets (PDU set delay budgets, PSDBs) of the first QoS flow and the second QoS flow respectively.

Based on the foregoing solution, the first network device can determine, based on the first information, to perform synchronization between a plurality of QoS flows at a granularity of associated data packets. According to the method provided in this embodiment of this application, the synchronization between the plurality of QoS flows can be performed at a finer granularity, so that a synchronization effect is improved.

S330: The first network device sends a first data packet, where the first data packet is transmitted by using the first QoS flow, and a moment at which the first data packet is sent by the first network device is a first moment. In other words, the first network device sends the first data packet at the first moment.

The first data packet is transmitted by using the first QoS flow. Therefore, the first data packet may also be referred to as a first data packet of the first QoS flow or a first data packet in the first QoS flow.

For example, the first network device may send the first data packet to a terminal device. However, this is not limited in this application, and the first network device may alternatively send the first data packet to another device.

It is assumed below that the second QoS flow has a synchronization requirement relative to the first QoS flow, the first data packet is sent before a second data packet, and the first data packet may be considered as a reference data packet. A sequence in which the first network device receives the first data packet and receives the second data packet is not limited in this application. The first data packet may be received by the first network device before the second data packet, or the second data packet may be received by the first network device before the first data packet. The second data packet may be understood as a payload (payload) part of an N6 data packet or an N3 data packet.

In the foregoing embodiment, the first moment is the moment at which the first network device sends the first data packet. In some other embodiments, the first moment may be a moment at which the first network device receives the first data packet.

S340: The first network device sends the second data packet based on the first moment and the preset duration, where the second data packet is transmitted by using the second QoS flow, and the second data packet is associated with the first data packet.

The first data packet is associated with the second data packet. In other words, there is an association relationship between the first data packet and the second data packet. It may alternatively be understood as that the first data packet and the second data packet are data packets that need to be synchronized in the first QoS flow and the second QoS flow. It should be understood that, after receiving the first data packet and the second data packet, the first network device needs to determine that the first data packet is associated with the second data packet. There are a plurality of solutions for how the first network device determines that the first data packet is associated with the second data packet. A sending time difference between data packets having the association relationship needs to be within the preset duration, so that the data packets having the association relationship satisfy the synchronization requirement. In other words, the data packets having the association relationship need to be synchronized based on the synchronization delay information, so that the data packets having the association relationship satisfy the synchronization requirement. In other words, that the first data packet is associated with the second data packet indicates that the first network device needs to send the first data packet and the second data packet based on the synchronization delay information. In other words, the first data packet and the second data packet are sent by the first network device based on the synchronization delay information. The first information may alternatively indicate synchronization delay information between the first data packet and the second data packet.

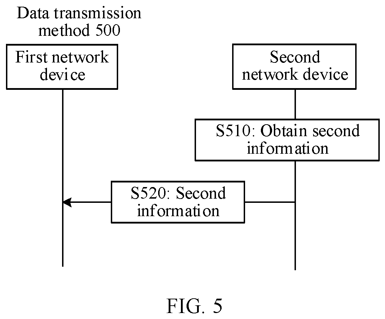

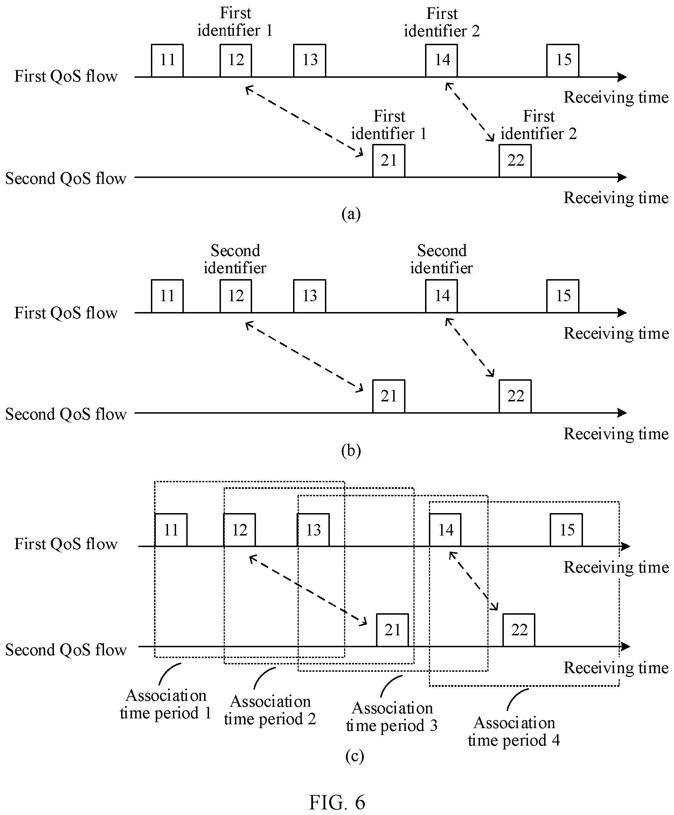

For example, the method 300 may further include: receiving second information, where the second information is used by the first network device to determine the association relationship between the data packet of the first QoS flow and the data packet of the second QoS flow. Accordingly, a second network device sends the second information to the first network device. Alternatively, the third network device sends the second information to the first network device. The second information sent by the second network device or the third network device to the first network device may be from another network device (for example, an application function network element), or may be determined by the second network device or the third network device. Optionally, in an implementation in which the third network device sends the second information to the first network device, the second information is carried in the configuration information of the first QoS flow and/or the configuration information of the second QoS flow. In other words, the configuration information of the first QoS flow and/or the configuration information of the second QoS flow may include the second information. For example, the configuration information may be the QoS profile (profile), or may be in another form. For example, the configuration information may be the N2 message sent by the third network device to the first network device. In an implementation in which the second network device sends the second information to the first network device, the second information may be included in data sent by the second network device to the first network device. For example, the second information may be included in packet header information corresponding to a data packet sent by the second network device to the first network device. For details, refer to the following descriptions about FIG. 5 and FIG. 6. Details are not described herein again.

The third network device may directly send the second information to the first network device. Alternatively, the third network device may send the second information to another network device, and the another network device sends the second information to the first network device.

Optionally, in some other implementation scenarios of the foregoing embodiment, S340 includes: sending the second data packet within the preset duration starting from the first moment. Based on this solution, the first network device can send a synchronization data packet within the preset duration starting from receiving the reference data packet. In this way, a delay between the reference data packet and the synchronization data packet can satisfy the synchronization requirement, so that synchronization between the synchronization data packet and the reference data packet is implemented. The synchronization data packet and the reference data packet may respectively belong to data flows with different modalities. Therefore, according to the data transmission method provided in this embodiment of this

application, the effect of the synchronization between the plurality of data flows can be improved, so that user experience is improved.

It should be noted that the preset duration may further correspond to synchronization delay information between more QoS flows. For example, the preset duration may correspond to synchronization delay information between the first QoS flow, the second QoS flow, and a third QoS flow. The first network device may further send a third data packet based on the first moment and the preset duration, where the third data packet is transmitted by using the third QoS flow, and the third data packet is associated with the first data packet. In other words, the first network device may send a plurality of data packets of different QoS flows based on the first moment and the preset duration. In this application, only two QoS flows are used as an example. This application may be further applicable to the more QoS flows.

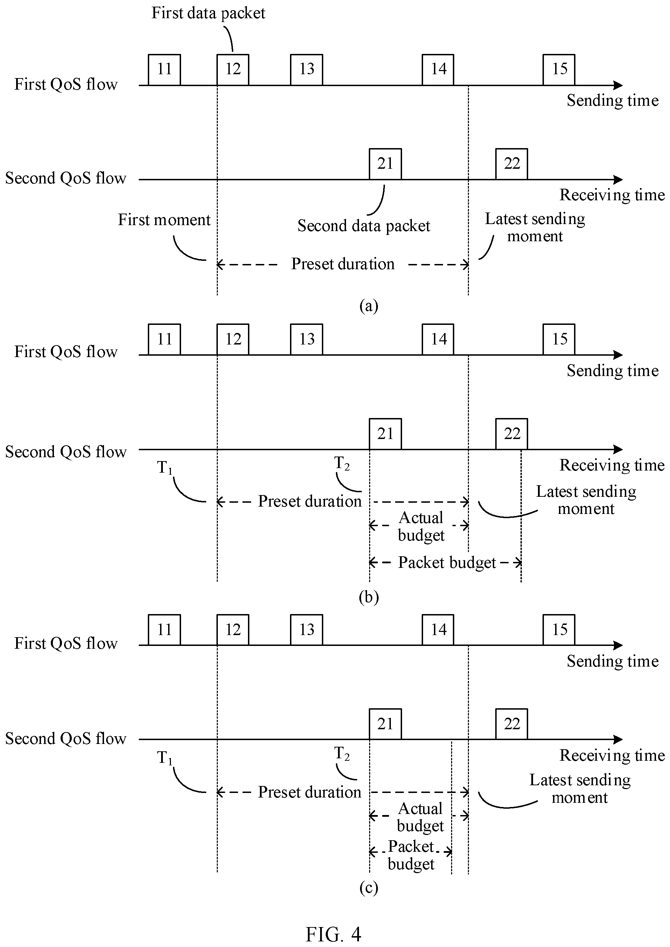

FIG. 4 is a diagram of a data transmission method 300 according to an embodiment of this application. The following describes a relationship between the preset duration, the first moment, the first data packet, and the second data packet with reference to FIG. 4. It should be noted that, in FIG. 4, a horizontal axis for the second QoS flow is receiving time. The further to the right along the horizontal axis, the later the first network device receives the data packet of the second QoS flow.

Refer to FIG. 4. The first QoS flow in FIG. 4 corresponds to the data flow 1 in FIG. 2, and the second QoS flow in FIG. 4 corresponds to the data flow 2 in FIG. 2. Details are not described herein. It should be noted that FIG. 4 is merely an example. Specific sending and receiving statuses of the data packet of the first QoS flow and the data packet of the second QoS flow are not limited in the method 300, there may be more or fewer data packets of the first QoS flow and data packets of the second QoS flow than those in FIG. 4, and a sending interval and a receiving interval between the data packet of the first QoS flow and the data packet of the second QoS flow may be greater or less than those in FIG. 4. The sending intervals may be equal intervals or unequal intervals. The receiving intervals may be equal intervals or unequal intervals. In other words, FIG. 4 does not constitute any limitation on the method 300 in this application, and FIG. 4 is merely an example for ease of understanding.

Refer to (a) in FIG. 4. Assuming that the data packet 12 is the first data packet, the moment of sending the first data packet is the first moment. Assuming that the data packet 21 is a second data packet, the second data packet needs to be sent within the preset duration shown in FIG. 4. In other words, the first network device needs to send the second data packet before a latest sending moment shown in FIG. 4.

If the first network device does not send the second data packet within the preset duration starting from the first moment, the first QoS flow is not synchronized with the second QoS flow, and user experience is poor.

Based on the foregoing solution, the first network device can send the synchronization data packet within the preset duration starting from receiving the reference data packet. In this way, the delay between the reference data packet and the synchronization data packet can satisfy the synchronization requirement, so that the synchronization between the synchronization data packet and the reference data packet is implemented. The synchronization data packet and the reference data packet may respectively belong to the data flows with the different modalities. Therefore, according to the data transmission method provided in this embodiment of this application, an effect of synchronization between data flows with a plurality of modalities can be improved, so that user experience is improved.

Refer to (b) and (c) in FIG. 4. Assuming that the moment of sending the first data packet is T1 (that is, the first moment is T1), and a moment of receiving the second data packet is T2, an actual budget of the second data packet may be obtained according to the following formula:

$$\text{Actual budget} = \text{Preset duration} - (T_2 - T_1)$$

Refer to (b) and (c) in FIG. 4. A packet budget may be a PSDB, and the PSDB may represent a budget delay of a PDU set in a data flow. After receiving a PDU set, the first network device needs to send the PDU set within the PSDB. To ensure user experience, transmission of each PDU set needs to be completed within a time interval. The transmission refers to transmission from a transmitting end of the PDU set to a receiving end. For downlink data transmission, the PSDB may be an upper time bound of a transmission delay of the PDU set from a UPF to UE or an upper time bound of a possible delay of a data packet between the UPF and an N6 termination point of the terminal. If transmission time of a PDU set exceeds the PSDB, a user may perceive a high delay, which degrades user experience.

In addition, the PSDB may alternatively be replaced with the PDB. Meanings of the PDB and the PSDB are similar. A difference lies in that the PSDB is for the PDU set while the PDB is for a packet. In other words, the package budget may alternatively be the PDB.

A sending moment of the second data packet may be further determined by comparing the actual budget with the packet budget. For example, refer to (b) in FIG. 4. When the packet budget is greater than or equal to the actual budget, the second data packet may be sent based on the actual budget. In other words, the second data packet is to be sent by the first network device before the actual budget. In other words, the second data packet is to be sent by the first network device before the latest sending moment. For another example, refer to (c) in FIG. 4. When the packet budget is less than or equal

to the actual budget, the second data packet may be sent based on the packet budget. In other words, the second data packet is to be sent by the first network device before the packet budget. The foregoing solution may alternatively be understood as that the first network device sends the second data packet based on a smaller value in the actual budget and the packet budget.

It may be understood that, in each of the cases shown in (b) and (c) in FIG. 4, the second data packet is sent by the first network device before the latest sending moment, that is, is sent by the first network device within the preset duration starting from the first moment.

The first network device can perform scheduling and transmission of the second data packet based on the actual budget, to ensure user experience. Alternatively, the first network device can discard the second data packet based on a policy. For example, when current resource scheduling cannot satisfy the actual budget, the second data packet may be discarded. This is because that the actual budget cannot be satisfied means that the synchronization requirement cannot be satisfied, user experience is affected, and the data packet may be discarded to save a network resource.

In an example, the first network device may respectively perform transmission of the first QoS flow and the second QoS flow by using different data radio bearers (data radio bearers, DRBs). For example, the first QoS flow corresponds to transmission on a DRB 1, and the second QoS flow corresponds to transmission on a DRB 2. After receiving the first data packet, the first network device may notify the DRB 2 corresponding to the second QoS flow to start a timer whose duration is the preset duration. If the second data packet is received during running of the timer, the first network device may determine the actual budget of the second data packet based on a remaining length of the timer, and transmission of the second data packet needs to be completed before the timer expires.

It should be noted that, as described above, the preset duration may be configured on the reference flow (for example, the first QoS flow), or may be configured on the synchronization flow (for example, the second QoS flow). If the preset duration is configured on the reference flow, the first network device may determine a timer parameter of a DRB for the synchronization flow by using the preset duration in a configuration of the reference flow when configuring the DRB for the synchronization flow. If the preset duration is configured on the synchronization flow, the first network device may directly determine a timer parameter of a DRB for the synchronization flow by using the preset duration in a configuration of the synchronization flow when configuring the DRB for the synchronization flow.

Based on the foregoing solution, the first network device can send the synchronization data packet based on a sending moment of the reference data packet and the preset duration indicating the synchronization delay information. In this way, the delay between the reference data packet and the synchronization data packet can satisfy the synchronization requirement, so that the synchronization between the synchronization data packet and the reference data packet is implemented. Therefore, according to the data transmission method provided in this embodiment of this application, the effect of the synchronization between the plurality of data flows can be improved, so that user experience is improved. In addition, based on the foregoing solution, the third network device can obtain the synchronization delay information between the reference flow and the synchronization flow, and send the synchronization delay information to the first network device, so that the first network device can send a data packet in the reference flow and a data packet in the synchronization flow based on the preset duration. In this way, the delay between the reference data packet and the synchronization data packet can satisfy the synchronization requirement, so that the synchronization between the synchronization data packet and the reference data packet is implemented. Therefore, according to the data transmission method provided in this embodiment of this application, the effect of the synchronization between the plurality of data flows can be improved, so that user experience is improved.

FIG. 5 is a schematic flowchart of another data transmission method 500 according to an embodiment of this application. According to the method 500, an effect of data synchronization between a plurality of data flows can be improved. The following describes the embodiment of the method 500 with reference to FIG. 5. It should be noted that the method 500 may be combined with the method 300.

S510: A second network device obtains second information, where the second information indicates an association relationship between a data packet of a first QoS flow and a data packet of a second QoS flow.

In an example, that the second network device obtains the second information may include: The second network device determines the association relationship between the data packet of the first QoS flow and the data packet of the second QoS flow, and determines the second information based on the association relationship. In another example, the second network device does not need to determine the association relationship between the data packet of the first QoS flow and the data packet of the second QoS flow, and obtains the second information in another manner. For an embodiment in which the second information is obtained in the another manner, refer to the following descriptions.

S520: The second network device sends the second information to a first network device.

Optionally, in some other implementation scenarios of the foregoing embodiment, the second information is carried in configuration information of the first QoS flow and/or configuration information of the second QoS flow. In other words, the configuration information of the first QoS flow and/or the configuration information of the second QoS flow may include the second information. For example, the configuration information may be a QoS profile (profile), or may be in another form. For example, the configuration information may be an N2 message sent by a third network device to the first

network device. In an implementation in which the second information is carried in the configuration information of the first QoS flow and/or the configuration information of the second QoS flow, the second information may be sent by the third network device to the first network device. The third network device may directly send the second information to the first network device. Alternatively, the third network device may send the second information to another network device, and the another network device sends the second information to the first network device.

In some other implementation scenarios, the second information may be carried in data that is of the first QoS flow and/or the second QoS flow and that is sent to the first network device. For example, the second information may be carried in packet header information corresponding to a data packet of the first QoS flow and/or a data packet of the second QoS flow. In an implementation in which the second information is carried in the data sent to the first network device, the second information may be sent by the second network device to the first network device. In other words, the second information may be carried in the data that is of the first QoS flow and/or the second QoS flow and that is sent by the second network device to the first network device. For details, refer to the following descriptions about FIG. 5 and FIG. 6. Details are not described herein.

The method 500 may be combined with the method 300. The following first continues to describe the method 300. For the embodiment of the method 500, refer to the following descriptions about FIG. 5 and FIG. 6.

Optionally, in some other implementation scenarios of the foregoing embodiment, the method 300 further includes: receiving the second information, where the second information is used by the first network device to determine the association relationship between the data packet of the first QoS flow and the data packet of the second QoS flow. Accordingly, the second network device sends the second information to the first network device. That is, the second network device performs S520. Alternatively, the third network device sends the second information to the first network device. Alternatively, the another network device (for example, the application function network element) sends the second information to the first network device.

The third network device may directly send the second information to the first network device. Alternatively, the third network device may send the second information to the another network device, and the another network device sends the second information to the first network device.

Based on the foregoing solution, the first network device may determine an association relationship between the data packet of the reference flow and the data packet of the synchronization flow based on the second information, where there is a synchronization requirement between the data packets having the association relationship. Therefore, through the foregoing solution, the first network device can identify the reference data packet and the synchronization data packet that need to be synchronized. This further improves the effect of the synchronization between the data flows, so that user experience is improved.

FIG. 6 is a diagram of a method for associating data packets of different QoS flows according to an embodiment of this application. With reference to FIG. 6, the following specifically describes an embodiment in which the second information is used by the first network device to determine the association relationship between the data packet of the first QoS flow and the data packet of the second QoS flow. It should be noted that horizontal axes in FIG. 6 each are receiving time of a data packet. The receiving time may be receiving time at which the first network device receives the data packet, or may be receiving time at which the second network device receives the data packet. The following first describes an embodiment in which the receiving time is the receiving time at which the first network device receives the data packet.

Optionally, in some other implementation scenarios of the foregoing embodiment, the second information is a first identifier, and S520 includes: When the first identifier corresponding to a first data packet is the same as the first identifier corresponding to a second data packet, the first network device determines that the second data packet is associated with the first data packet. Correspondingly, the second information sent by the second network device to the first network device is the first identifier, and the method 500 further includes: The second network device sends the first data packet and the second data packet to the first network device, where the first data packet corresponds to the first identifier, the second data packet corresponds to the first identifier, the first data packet is transmitted by using the first QoS flow, and the second data packet is transmitted by using the second QoS flow.

For example, the first identifier may be a synchronization sequence number (synchronization sequence number, SSN). For example, the first data packet corresponds to the SSN, and the second data packet also corresponds to the same SSN.

The first identifier may be carried in packet header information corresponding to the first data packet or the second data packet. For example, the packet header information may be packet header information of an N3 data packet, and the packet header information of the N3 data packet may be understood as a general packet radio service tunneling protocol-user plane (general packet radio service tunneling protocol-user plane, GTP-U) packet header. It should be noted that the first identifier may alternatively not be in packet header information corresponding to the first data packet or the second data packet. For example, the first identifier may be used as a parameter independent of the first data packet or the second data packet. When the first identifier is used as the independent parameter, the first identifier may include an identifier of a data packet, so that the first network device can determine, based on the identifier of the data packet, the data packet corresponding to the first identifier. For example, the first identifier may include an identifier of the first data packet.

Before the second network device sends the first data packet and the second data packet to the first network device, the method 500 may further include: determining that there is an association relationship between the first data packet and the second data packet; and adding the first identifier to first packet header information corresponding to the first data packet and the first packet header information corresponding to the second data packet, where the first packet header information may be the packet header information of the N3 data packet.

Before the second network device sends the first data packet and the second data packet to the first network device, the method 500 may further include: determining that there is an association relationship between the first data packet and the second data packet; and determining the first identifier, where the first identifier corresponds to the first data packet, and the first identifier corresponds to the second data packet.

Refer to (a) in FIG. 6. A data packet 12 of the first QoS flow includes a first identifier 1, and a data packet 21 of the second QoS flow also includes the first identifier 1. Therefore, the first network device may determine that the data packet 12 and the data packet 21 that have the first identifier 1 are associated with each other. In addition, a data packet 14 of the first QoS flow includes a first identifier 2, and a data packet 22 of the second QoS flow also includes the first identifier 2. Therefore, the first network device may determine that the data packet 14 and the data packet 22 that have the first identifier 2 are associated with each other. It may be understood that the first identifier 1 and the first identifier 2 are different first identifiers.

Further, a data packet that first arrives at the first network device in data packets having a same first identifier may be used as a reference for a data packet that arrives later. That is, the data packet that first arrives at the first network device in the data packets having the same first identifier may be used as a reference data packet, and the data packet that arrives at the first network device later and that is associated with the data packet that first arrives at the first network device is used as a synchronization data packet.

Based on the foregoing solution, the first network device may determine that there is an association relationship between data packets that carry a same identifier, where there is a synchronization requirement between the data packets having the association relationship. Therefore, through the foregoing solution, the first network device can identify the reference data packet and the synchronization data packet that need to be synchronized. This further improves the effect of the synchronization between the data flows, so that user experience is improved. In addition, based on the foregoing solution, the second network device may enable the data packets having the association relationship to correspond to the same identifier, where there is a synchronization requirement between the data packets having the association relationship. Therefore, through the foregoing solution, the first network device can identify the reference data packet and the synchronization data packet that need to be synchronized. This further improves the effect of the synchronization between the data flows, so that user experience is improved.

Optionally, in some other implementation scenarios of the foregoing embodiment, the second information is a second identifier, and S520 includes: The first network device receives a first data packet, where the first data packet corresponds to the second identifier, and the second identifier indicates that the first data packet is used as a synchronization reference for the data packet of the second QoS flow. Correspondingly, the second information sent by the second network device to the first network device is the second identifier, and the method 500 further includes: The second network device sends the first data packet to the first network device, where the first data packet corresponds to the second identifier, and the second identifier indicates that the first data packet is used as the synchronization reference for the data packet of the second QoS flow.

In an example, the second identifier may be any identifier, and is used by the first network device to determine, after identification, that the data packet corresponding to the second identifier is used as the synchronization reference for the data packet of the second QoS flow. In another example, the second identifier may indicate a start moment. The start moment is a moment at which the first network device receives the data packet corresponding to the second identifier. After the start moment, the data packet received at the start moment is used as the synchronization reference for the data packet that is of the second QoS flow and that is received by the first network device.

That the first data packet is used as the synchronization reference for the data packet of the second QoS flow may be understood as that the first data packet is used as a reference data packet for the data packet of the second QoS flow, or may be understood as that the first data packet is associated with the data packet of the second QoS flow.

The second identifier may be carried in packet header information corresponding to the first data packet or a second data packet. For example, the packet header information may be packet header information of an N3 data packet. The second identifier may alternatively not be in packet header information corresponding to the first data packet or a second data packet. For example, the second identifier may be used as a parameter independent of the first data packet or the second data packet.

Before the second network device sends the first data packet and the second data packet to the first network device, the method 500 may further include: determining that there is an association relationship between the first data packet and the second data packet; and adding the second identifier to first packet header information corresponding to the first data packet, where the first packet header information may be the packet header information of the N3 data packet.

Before the second network device sends the first data packet and the second data packet to the first network

device, the method 500 may further include: determining that there is an association relationship between the first data packet and the second data packet; and determining the second identifier, where the second identifier corresponds to the first data packet.

It should be noted that, in some other embodiments, the second network device may determine the second identifier without determining that there is an association relationship between the first data packet and the second data packet. For details, refer to the following embodiments. Details are not described herein.

Based on the foregoing solution, the second identifier may indicate that the first data packet is used as the reference data packet for the data packet of the second QoS flow, so that the first network device can identify the reference data packet and the synchronization data packet that need to be synchronized. This further improves the effect of the synchronization between the data flows, so that user experience is improved. In addition, based on the foregoing solution, the second network device indicates the reference data packet by using the second information, and the reference data packet may be used as a synchronization reference for a data packet of a synchronization flow. Through the foregoing solution, the first network device can identify the reference data packet and the synchronization data packet that need to be synchronized. This further improves the effect of the synchronization between the data flows, so that user experience is improved.

Optionally, in some other implementation scenarios of the foregoing embodiment, the method 300 further includes: when the first network device receives the second data packet after the first network device receives the first data packet, determining that the second data packet is associated with the first data packet.

Refer to (b) in FIG. 6. A data packet 12 includes or carries the second identifier. Therefore, the first network device may determine that a data packet 21 is associated with the data packet 12. This is because the data packet 21 is received before the data packet 12 is received. The data packet 12 may be understood as the first data packet, and the data packet 21 may be understood as the second data packet.

In an example, the method 300 further includes: after receiving the second data packet, receiving a third data packet, where the third data packet corresponds to a second identifier, the second identifier indicates that the third data packet is used as a synchronization reference for the data packet of the second QoS flow, and the third data packet is transmitted by using the first QoS flow.

Further, the method 300 further includes: The data packet that is of the second QoS flow and that is received by the first network device after the first network device receives the first data packet and before the first network device receives the third data packet is associated with the first data packet.

Refer to (b) in FIG. 6. Because the first network device receives the data packet 21 after the first network device receives the data packet 12 (corresponding to the first data packet) and before the first network device receives a data packet 14, the first network device may determine that the data packet 21 is associated with the data packet 12.

Further, the method 300 further includes: The data packet that is of the second QoS flow and that is received by the first network device after the first network device receives the third data packet is associated with the third data packet.

For example, the data packet 14 includes or carries the second identifier. Therefore, the first network device may determine that a data packet 22 is associated with the data packet 14. This is because the data packet 22 is received before the data packet 14 is received. The data packet 14 may be understood as the third data packet.

It may be understood that the second identifier corresponding to the third data packet and the second identifier corresponding to the first data packet may be a same identifier, or may be different identifiers.

For the second identifier corresponding to the third data packet, the second identifier may indicate a start moment, or may indicate an end moment. The start moment is a moment at which the first network device receives the third data packet. After the start moment, the third data packet received at the start moment is used as a synchronization reference for the data packet that is of the second QoS flow and that is received by the first network device. The end moment is also the moment at which the first network device receives the third data packet. Before the end moment, a previous data packet (for example, the first data packet) that is used as a synchronization reference is used as a synchronization reference for the data packet that is of the second QoS flow and that is received by the first network device. In other words, in a time period from the start moment indicated by the second identifier corresponding to the first data packet to the end moment indicated by the second identifier corresponding to the third data packet, the first data packet is used as the synchronization reference for the data packet that is of the second QoS flow and that is received by the first network device.

Refer to (b) in FIG. 6. Because the first network device receives the data packet 21 in a time period from the start moment indicated by the second identifier corresponding to the data packet 12 to the end moment indicated by the second identifier corresponding to the data packet 14, the data packet 12 is used as the synchronization reference for the data packet 21.

Based on the foregoing solution, the second identifier may indicate that the first data packet is used as the reference data packet for the data packet in the synchronization flow, and the first network device may determine that the data packet that is of the synchronization flow and that is received after the reference data packet is associated with the reference data packet. Through the foregoing solution, the first network device can identify the reference data packet and

the synchronization data packet that need to be synchronized. This further improves the effect of the synchronization between the data flows, so that user experience is improved.

Optionally, in some other implementation scenarios of the foregoing embodiment, the receiving the second information includes: receiving the second information from the second network device.

Optionally, in some other implementation scenarios of the foregoing embodiment, the second information indicates a first duration, and the method 300 further includes: determining the association relationship between the data packet of the first QoS flow and the data packet of the second QoS flow based on a moment at which the first network device receives the data packet of the first QoS flow, the first duration, and a moment at which the first network device receives the data packet of the second QoS flow.

It may be understood that a function of a preset duration includes determining a transmission delay of the synchronization data packet, and a function of the first duration includes determining associated data packets. The first duration and the preset duration may be the same, or may be different. The first duration and the preset duration may be one parameter, or may be two parameters. When the preset duration and the first duration are a same parameter, the parameter has both the function of determining the associated data packets and the function of determining the transmission delay.

The first duration may alternatively have another name, for example, an association time window, a time window, or an association duration. A specific name of the first duration is limited in this application.

It should be noted that, when the second information indicates the first duration, the second information may be received by the first network device from the third network device, or may be received by the first network device from the second network device. FIG. 5 shows only a solution in which the first network device receives the second information from the second network device. However, this is not limited in this application. The first network device may alternatively receive the second information from the third network device.

The second information sent by the second network device or the third network device to the first network device may be from the another network device (for example, the application function network element), or may be determined by the second network device or the third network device. In other words, the first network device may receive the second information from the third network device, where the second information indicates the first duration. The first network device may receive second information from the second network device, where the second information indicates the first duration.

Refer to (c) in FIG. 6, time at which a data packet of the first QoS flow is received is a start location of an association time period corresponding to the data packet, and the first duration is used as a length of the association time period, so that the association time period corresponding to the data packet can be determined. For example, a data packet 11 corresponds to an association time period 1, the data packet 12 corresponds to an association time period 2, a data packet 13 corresponds to an association time period 3, and the data packet 14 corresponds to an association time period 4. It should be noted that, to better describe the foregoing solution with reference to FIG. 5, the association time periods in (b) in FIG. 6 are not aligned on horizontal axes, but lengths (namely, the first duration) of the association time periods are consistent.

Still refer to (c) in FIG. 6. The data packet 21 of the second QoS flow is in the association time period 2, and the association time period 2 corresponds to the data packet 12. Therefore, the data packet 21 is associated with the data packet 12. The data packet 22 of the second QoS flow is in the association time period 4, and the association time period 4 corresponds to the data packet 14. Therefore, the data packet 22 is associated with the data packet 14.

If a synchronization data packet is located in association time periods of a plurality of reference data packets, any one of the plurality of reference data packets may be used as a synchronization reference for the synchronization data packet. Alternatively, a data packet that is first received by the first network device in the plurality of reference data packets may be used as a synchronization reference for the synchronization data packet.

In an example, the first network device may start, by using receiving time of the data packet 12 as a reference, a timer whose duration is the first duration. Before the timer expires, a data packet received in the second QoS flow is a data packet associated with the data packet 12.

Based on the foregoing solution, the first network device can determine the association relationship between the data packet in the reference flow and the data packet in the synchronization flow based on a moment at which the first network device receives the data packet in the reference flow, the first duration, and a moment at which the data packet in the synchronization flow is received. Through the foregoing solution, the first network device can identify the reference data packet and the synchronization data packet that need to be synchronized. This further improves the effect of the synchronization between the data flows, so that user experience is improved.

Optionally, in some other implementation scenarios of the foregoing embodiment, the determining the association relationship between the data packet of the first QoS flow and the data packet of the second QoS flow based on the moment at which the first network device receives the data packet of the first QoS flow, the first duration, and the moment at which the first network device receives the data packet of the second QoS flow includes: when the first network device receives the second data packet within the first duration starting from receiving the first data packet by the first network

device, determining that the second data packet is associated with the first data packet.

In other words, the first network device may directly use the first duration received by the first network device as the association time window, to determine the associated data packets.

Based on the foregoing solution, the first network device may determine that a data packet received within the first duration starting from receiving the reference data packet is the synchronization data packet, so that the first network device can identify the reference data packet and the synchronization data packet that need to be synchronized. This further improves the effect of the synchronization between the data flows, so that user experience is improved.

Optionally, in some other implementation scenarios of the foregoing embodiment, the first duration is related to first jitter information and/or second jitter information, the first jitter information is related to the first QoS flow, and the second jitter information is related to the second QoS flow.

In other words, the second network device or the third network device may determine the first duration based on the first jitter information and/or the second jitter information. An embodiment in which the second network device or the third network device determines the first duration based on the first jitter information and/or the second jitter information is similar to an embodiment in which the first network device determines a second duration based on the first duration. For the embodiment in which the first network device determines the second duration based on the first duration, refer to the following descriptions. Details are not described herein.

The first jitter information may reflect jitter (jitter) of an N6 data packet corresponding to the data packet of the first QoS flow. The second jitter information may reflect jitter of an N6 data packet corresponding to the data packet of the second QoS flow. However, this is not limited in this application. For example, jitter information may further reflect a jitter of an N3 data packet corresponding to a data packet of a QoS flow. The jitter information may be understood as delay information. Jitter information of an N6 data packet may be determined by the second network device. The second network device may send the jitter information of the N6 data packet to another network device. The another network device receives the jitter information of the N6 data packet, and determines the first duration based on the jitter information of the N6 data packet.

The jitter information may be a value, for example, 1 ms (millisecond); or the jitter information may be a value range, for example, 1 ms to 5 ms.

Based on the foregoing solution, jitter of the first QoS flow and/or jitter of the second QoS flow are/is considered for the first duration. When a delay occurs in data packet receiving, through the solution provided in this embodiment of this application, the reference data packet and the synchronization data packet that need to be synchronized can still be accurately identified, so that applicability of the data transmission method is improved.

Optionally, in some other implementation scenarios of the foregoing embodiment, the determining the association relationship between the data packet of the first QoS flow and the data packet of the second QoS flow based on the moment at which the first network device receives the data packet of the first QoS flow, the first duration, and the moment at which the first network device receives the data packet of the second QoS flow includes: determining a second duration based on first jitter information and/or second jitter information, and the first duration, where the first jitter information is related to the first QoS flow, and the second jitter information is related to the second QoS flow; and when the first network device receives the second data packet within the second duration starting from receiving the first data packet by the first network device, determining that the second data packet is associated with the first data packet.

In other words, after receiving the second information indicating the first duration, the first network device may determine the second duration based on the first jitter information and/or the second jitter information, and the first duration.

As described above, jitter information may further reflect jitter of an N6 data packet corresponding to a data packet of a QoS flow, may reflect jitter of an N3 data packet, or may reflect jitter of a data packet on another interface. The jitter information may be understood as delay information.

The foregoing solution may be understood as that the first network device determines a final association time window (corresponding to the second duration) based on an original association time window (corresponding to the first duration) indicated by a core network device and the jitter information. In other words, the first network device may adjust a length of the association time window based on the jitter information. For example, when a duration (corresponding to the first duration) of the association time window is 10 ms, and the jitter information is $\pm 1$ ms, an adjusted length (corresponding to the second duration) of the association time window is 9 ms to 11 ms.

The jitter information may indicate jitter of a data packet. If the jitter indicated by the jitter information is positive, it indicates that the data packet arrives at a target device (for example, the first network device, the second network device, or another device) later. If the jitter indicated by the jitter information is negative, it indicates that the data packet arrives at a target device earlier.

The adjusted association time window (corresponding to the second duration) may be determined by synthesizing jitter information of at least one of the plurality of data flows. In some embodiments, a duration of the adjusted association time window may be calculated by using the following formula:

Second duration=First duration–Jitter of the reference flow

For example, if the first QoS flow is the reference flow, and jitter of the data packet in the first QoS flow is jitter 1, the second duration may be set to the first duration minus the jitter 1. If the reference flow arrives at the target device earlier than theoretical time of arrival, the jitter of the reference flow is a positive number, and the second duration is less than the first duration. If the reference flow arrives at the target device later than theoretical time of arrival, the jitter of the reference flow is a negative number, and the second duration is greater than the first duration.

In some other embodiments, a duration of the adjusted association time window may be calculated by using the following formula:

Second duration=First duration+Jitter of the synchronization data flow

For example, if the second QoS flow is the synchronization flow, and jitter of the data packet in the second QoS flow is jitter 2, the second duration may be set to the first duration plus jitter 1. If the synchronization flow arrives at the target device earlier than theoretical time of arrival, the jitter of the synchronization flow is a positive number, and the second duration is greater than the first duration. If the synchronization flow arrives at the target device later than theoretical time of arrival, the jitter of the synchronization flow is a negative number, and the second duration is less than the first duration.

In still some other embodiments, a duration of the adjusted association time window may be calculated by using the following formula:

Second duration=First duration-Jitter of the reference data flow+Jitter of the synchronization data flow

The calculation manner may be a combination of the first two calculation manners. For an example, refer to the first two embodiments. Details are not described herein.

Based on the foregoing solution, the first network device considers jitter of the first QoS flow and/or jitter of the second QoS flow based on the second duration, to obtain the first duration. When the jitter occurs in data packet receiving, through the solution provided in this embodiment of this application, the reference data packet and the synchronization data packet that need to be synchronized can still be accurately identified, so that applicability of the data transmission method is improved.

The embodiment in which the second network device or the third network device determines the first duration based on the first jitter information and/or the second jitter information is similar to the embodiment in which the first network device determines the second duration based on the first duration. Details are not described again.

Optionally, in some other implementation scenarios of the foregoing embodiment, the method 300 further includes: The third network device sends the second information to the first network device, where the second information indicates the first duration, and the first duration is used by the first network device to determine the association relationship between the data packet of the first QoS flow and the data packet of the second QoS flow.

The third network device may directly send the second information to the first network device. Alternatively, the third network device may send the second information to the another network device, and the another network device sends the second information to the first network device.

Based on the foregoing solution, the third network device can indicate the first duration to the first network device by using the second information, so that the first network device can determine the association relationship between the data packet in the reference flow and the data packet in the synchronization flow based on the first duration. Through the foregoing solution, the first network device can identify the reference data packet and the synchronization data packet that need to be synchronized. This further improves the effect of the synchronization between the data flows, so that user experience is improved.

Optionally, in some other implementation scenarios of the foregoing embodiment, the method 300 further includes: The third network device receives third information from the application function network element, where the third information indicates a fifth duration. The third network device determines the first duration based on the first jitter information and/or the second jitter information, and the fifth duration, where the first jitter information is related to the first QoS flow, and the second jitter information is related to the second QoS flow.

An embodiment in which the third network device determines the third duration based on the first jitter information and/or the second jitter information, and the fifth duration is similar to the embodiment in which the first network device determines the second duration based on the first duration. A difference lies in that, in this embodiment, the first duration is replaced with the fifth duration, the second duration is replaced with the third duration, and a device for determining the adjusted association time window changes from the first network device to the third network device. For details, refer to the foregoing embodiment. Details are not described herein.

Based on the foregoing solution, the third network device may consider the jitter of the first QoS flow and/or the jitter of the second QoS flow based on the fifth duration indicated by the application function network element, to obtain the first duration. When the delay occurs in data packet receiving, through the solution provided in this embodiment of this application, the reference data packet and the synchronization data packet that need to be synchronized can still be accurately identified, so that the applicability of the data transmission method is improved.

Optionally, in some other implementation scenarios of the foregoing embodiment, the method 300 further includes: The third network device receives fourth information from the second network device, where the fourth information indicates the first jitter information and/or the second jitter information.

Based on the foregoing solution, the third network device may obtain the first jitter information and/or the second jitter information from the second network device, so that the jitter of the first QoS flow and/or the jitter of the second QoS flow are/is considered based on the fifth duration indicated by the application function network element, to obtain the first duration. When the delay occurs in data packet receiving, through the solution provided in this embodiment of this application, the reference data packet and the synchronization data packet that need to be synchronized can still be accurately identified, so that the applicability of the data transmission method is improved.

Optionally, in some other implementation scenarios of the foregoing embodiment, the first QoS flow and the second QoS flow are for transmission of at least two of data flows that are of a target service and that are with different modalities.

A modality of the first QoS flow is different from a modality of the second QoS flow. For example, when the first QoS flow is an auditory flow, the second QoS flow may be a visual flow or a tactile flow. However, specific modalities of the first QoS flow and the second QoS flow are not limited in this application.

Based on the foregoing solution, according to the data transmission method provided in this embodiment of this application, an effect of synchronization between data flows with a plurality of modalities can be improved, so that user experience is improved.

It should be noted that, in some other embodiments, the first QoS flow and the second QoS flow may be for transmission of data flows with a same modal for a target service.

The following describes in detail the embodiment of the method 500 with reference to FIG. 5.

Refer to FIG. 5. Based on the method 500, the second network device can send the second information to the first network device, so that the first network device can determine the association relationship between the data packet of the first QoS flow and the data packet of the second QoS flow based on the second information. In this way, the first network device can identify the reference data packet and the synchronization data packet that need to be synchronized, and the synchronization between the plurality of data flows is implemented.

Optionally, in some other implementation scenarios of the foregoing embodiment, the method 500 further includes: The second network device receives indication information from the third network device, where the indication information is for triggering the second network device to determine the association relationship between the data packet of the first QoS flow and the data packet of the second QoS flow. S510 includes: determining the second information based on the indication information.

Accordingly, the method 300 further includes: The third network device sends the indication information to the second network device.

For example, the third network device may send the indication information to the second network device by using an N4 session (sessions) establishment message or an N4 session modification message. A specific message for carrying the indication information is not limited in this application, and the third network device may send the indication information to the second network device via another message. For example, the indication information may be carried in a request message, a configuration message, or another message.

It may be understood that the indication information may trigger a procedure in which the second network device determines an association relationship between data packets of a plurality of QoS flows. A name of the indication information is not limited in this application. For example, the name of the indication information may alternatively be request information, configuration information, or another name.

In some embodiments, the indication information further indicates the second network device to send the association relationship between the data packet of the first QoS flow and the data packet of the second QoS flow to the first network device. In other words, the indication information may be for triggering the second network device to determine the association relationship between the data packet of the first QoS flow and the data packet of the second QoS flow and send the association relationship to the first network device.

Based on the foregoing solution, after receiving the indication information, the second network device may identify the association relationship between the data packet of the reference flow and the data packet of the synchronization flow. Therefore, the first network device can identify, by using the second information determined and delivered by the second network device, the reference data packet and the synchronization data packet that need to be synchronized. Through the foregoing solution, this further improves the effect of the synchronization between the data flows, so that user experience is improved. In addition, based on the foregoing solution, the third network device may send the indication

information to the second network device, so that the second network device can identify the association relationship between the data packet of the reference flow and the data packet of the synchronization flow. Through the foregoing solution, this further improves the effect of the synchronization between the data flows, so that user experience is improved.

Optionally, in some other implementation scenarios of the foregoing embodiment, the method 500 further includes: receiving a target identifier from the application function network element, where the target identifier is for determining the association relationship between the data packet of the first QoS flow and the data packet of the second QoS flow.

For example, the target identifier may be similar to the first identifier. When at least one data packet that is of the second QoS flow and that is from the application function network element corresponds to the target identifier, the second network device may determine that the at least one data packet is associated with the first data packet.

For example, the target identifier may be similar to the second identifier. At least one data packet that is of the second QoS flow and that is received by the second network device from the application function network element after the second network device receives the first data packet from the application function network element is associated with the first data packet.

Based on the foregoing solution, the second network device may determine the association relationship between the data packet of the reference flow and the data packet of the synchronization flow based on the target identifier, where there is a synchronization requirement between the data packets having the association relationship. Therefore, through the foregoing solution, the second network device can identify the reference data packet and the synchronization data packet that need to be synchronized. This further improves the effect of the synchronization between the data flows, so that user experience is improved.

Optionally, in some other implementation scenarios of the foregoing embodiment, the receiving the target identifier from the application function network element includes: receiving the first data packet and the second data packet from the application function network element, where the first data packet corresponds to the target identifier, and the second data packet corresponds to the target identifier; and when the target identifier corresponding to the second data packet is the same as the target identifier corresponding to the first data packet, determining that the first data packet is associated with the second data packet.

A specific embodiment is similar to the foregoing embodiment related to the first identifier. For example, refer to (a) in FIG. 6. A difference lies in that the first identifier in (a) in FIG. 6 is replaced with the target identifier (not shown in FIG. 6), and horizontal axes in (a) in FIG. 6 indicate receiving time at which the third network device receives the data packets.

Based on the foregoing solution, the second network device may determine that there is an association relationship between data packets that carry a same identifier, where there is a synchronization requirement between the data packets having the association relationship. Therefore, through the foregoing solution, the second network device can identify the reference data packet and the synchronization data packet that need to be synchronized. This further improves the effect of the synchronization between the data flows, so that user experience is improved.

Optionally, in some other implementation scenarios of the foregoing embodiment, the target identifier further indicates at least one data packet as a synchronization reference for the data packet of the second QoS flow, and the receiving the target identifier from the application function network element includes: receiving the first data packet, where the first data packet corresponds to the target identifier; and when the second network device receives the second data packet after the second network device receives the first data packet, determining that the second data packet is associated with the first data packet.

A specific embodiment is similar to the foregoing embodiment related to the second identifier. For example, refer to (b) in FIG. 6. A difference lies in that the second identifier in (b) in FIG. 6 is replaced with the target identifier (not shown in FIG. 6), and horizontal axes in (b) in FIG. 6 indicate receiving time at which the third network device receives the data packets.

Based on the foregoing solution, the target identifier may indicate that the first data packet is used as the reference data packet for the data packet of the synchronization flow, and the second network device may determine that the data packet that is of the synchronization flow and that is received after the reference data packet is associated with the reference data packet. Through the foregoing solution, the first network device can identify the reference data packet and the synchronization data packet that need to be synchronized. This further improves the effect of the synchronization between the data flows, so that user experience is improved.

Optionally, in some other implementation scenarios of the foregoing embodiment, the indication information further indicates a third duration, and the method 500 further includes: The second network device determines the association relationship between the data packet of the first QoS flow and the data packet of the second QoS flow based on a moment at which the second network device receives the data packet of the first QoS flow, the third duration, and a moment at which the second network device receives the data packet of the second QoS flow.

In other words, the third duration is used by the second network device to determine the association relationship between the data packet of the first QoS flow and the data packet of the second QoS flow.

A specific embodiment is similar to the foregoing embodiment related to the first duration. For example, refer to (c) in FIG. 6. A difference lies in that the first duration in (c) in FIG. 6 is replaced with the third duration (not shown in FIG. 6), and horizontal axes in (c) in FIG. 6 indicate receiving time at which the third network device receives the data packets.

Based on the foregoing solution, the second network device can determine the association relationship between the data packet in the reference flow and the data packet in the synchronization flow based on a moment at which the second network device receives the data packet in the reference flow, the third duration, and a moment at which the data packet in the synchronization flow is received. Through the foregoing solution, the second network device can identify the reference data packet and the synchronization data packet that need to be synchronized. This further improves the effect of the synchronization between the data flows, so that user experience is improved. In addition, based on the foregoing solution, the third network device may further indicate the third duration to the second network device by using the indication information, so that the second network device can determine the association relationship between the data packet in the reference flow and the data packet in the synchronization flow based on the third duration. Through the foregoing solution, the second network device can identify the reference data packet and the synchronization data packet that need to be synchronized. This further improves the effect of the synchronization between the data flows, so that user experience is improved.

Optionally, in some other implementation scenarios of the foregoing embodiment, the method 300 further includes: The third network device receives the third information from the application function network element, where the third information indicates the fifth duration. The third network device determines the third duration based on the first jitter information and/or the second jitter information, and the fifth duration, where the first jitter information is related to the first QoS flow, and the second jitter information is related to the second QoS flow.

An embodiment in which the third network device determines the first duration based on the first jitter information and/or the second jitter information, and the fifth duration is similar to the embodiment in which the first network device determines the second duration based on the first duration. A difference lies in that, in this embodiment, the first duration in the foregoing embodiment is replaced with the fifth duration, the second duration in the foregoing embodiment is replaced with the first duration, and the device for determining the adjusted association time window changes from the first network device to the third network device. For details, refer to the foregoing embodiment. Details are not described herein.

It should be noted that the third duration is indicated by the indication information. The indication information may trigger a procedure in which the second network device identifies associated data packets of the plurality of QoS flows, and may further indicate the third duration. The first duration is indicated by using second information. The second information is different from the indication information, and the second information may not trigger the procedure in which the second network device identifies the associated data packets of the plurality of QoS flows. In other words, triggering the procedure in which the second network device identifies the associated data packets of the plurality of QoS flows may be coupled to or decoupled from the association time window. The first duration and the third duration may be the same, or may be different.

Based on the foregoing solution, the jitter of the first QoS flow and/or the jitter of the second QoS flow are/is considered for the third duration. When the delay occurs in data packet receiving, through the solution provided in this embodiment of this application, the reference data packet and the synchronization data packet that need to be synchronized can still be accurately identified, so that the applicability of the data transmission method is improved.

Optionally, in some other implementation scenarios of the foregoing embodiment, the method 300 further includes: The third network device receives the fourth information from the second network device, where the fourth information indicates the first jitter information and/or the second jitter information.

Based on the foregoing solution, the third network device may obtain the first jitter information and/or the second jitter information from the second network device, so that the jitter of the first QoS flow and/or the jitter of the second QoS flow are/is considered based on the fifth duration indicated by the application function network element, to obtain the first duration. When the delay occurs in data packet receiving, through the solution provided in this embodiment of this application, the reference data packet and the synchronization data packet that need to be synchronized can still be accurately identified, so that the applicability of the data transmission method is improved.

Optionally, in some other implementation scenarios of the foregoing embodiment, that the second network device determines the association relationship between the data packet of the first QoS flow and the data packet of the second QoS flow based on the moment at which the second network device receives the data packet of the first QoS flow, the third duration, and the moment at which the second network device receives the data packet of the second QoS flow includes: When the second network device receives the second data packet within the third duration starting from receiving the first data packet by the second network device, the second network device determines that the second data packet is associated with the first data packet.

In other words, the second network device may directly use the third duration as the association time window, to determine the associated data packets.

Based on the foregoing solution, the second network device may determine that a data packet received within the third duration starting from receiving the reference data packet is the synchronization data packet, so that the second network device can identify the reference data packet and the synchronization data packet that need to be synchronized.

This further improves the effect of the synchronization between the data flows, so that user experience is improved.

Optionally, in some other implementation scenarios of the foregoing embodiment, the third duration is related to the first jitter information and/or the second jitter information, the first jitter information is related to the first QoS flow, and the second jitter information is related to the second QoS flow.

In other words, the third network device may determine the third duration based on the first jitter information and/or the second jitter information. For a specific embodiment, refer to the following embodiment for the third network device. Details are not described herein.

The jitter information may reflect a jitter of a data packet corresponding to the data packet of the QoS flow. The jitter information may be understood as the delay information. For other meanings of the jitter information, refer to the foregoing descriptions of the jitter information. Details are not described herein.

Based on the foregoing solution, the jitter of the first QoS flow and/or the jitter of the second QoS flow are/is considered for the third duration. When the delay occurs in data packet receiving, through the solution provided in this embodiment of this application, the reference data packet and the synchronization data packet that need to be synchronized can still be accurately identified, so that the applicability of the data transmission method is improved.

Optionally, in some other implementation scenarios of the foregoing embodiment, that the second network device determines the association relationship between the data packet of the first QoS flow and the data packet of the second QoS flow based on the moment at which the second network device receives the data packet of the first QoS flow, the third duration, and the moment at which the second network device receives the data packet of the second QoS flow includes: The second network device determines a fourth duration based on first jitter information and/or second jitter information, and the third duration, where the first jitter information is related to the first QoS flow, and the second jitter information is related to the second QoS flow. When the second network device receives the second data packet within the fourth duration starting from receiving the first data packet by the second network device, the second network device determines that the second data packet is associated with the first data packet.

In other words, after receiving the indication information indicating the third duration, the second network device may determine the fourth duration based on the first jitter information and/or the second jitter information, and the third duration. This solution is similar to the embodiment in which the first network device determines the second duration based on the first jitter information and/or the second jitter information, and the first duration. A difference lies in that, in this solution, the third duration is replaced with the first duration, the second duration is replaced with the fourth duration, and the device for determining the adjusted associated time window changes from the first network device to the second network device. For details, refer to the foregoing embodiment. Details are not described herein.

Based on the foregoing solution, the second network device considers the jitter of the first QoS flow and/or the jitter of the second QoS flow based on the third duration, to obtain the fourth duration. When the delay occurs in data packet receiving, through the solution provided in this embodiment of this application, the reference data packet and the synchronization data packet that need to be synchronized can still be accurately identified, so that the applicability of the data transmission method is improved.

Optionally, in some other implementation scenarios of the foregoing embodiment, the method 500 further includes: The second network device receives the first data packet from the application function network element; and determines that the first data packet corresponds to the target identifier, where the target identifier indicates that the first data packet is used as the synchronization reference for the data packet of the second QoS flow; and the sending the first data packet to the first network device includes: sending the first data packet to the first network device, where the first data packet corresponds to the second identifier.

The target identifier and the second identifier may be carried in the packet header information corresponding to the first data packet. For example, the first packet header information may be packet header information of the N6 data packet, the first packet header information may include the target identifier, and the first packet header information may be packet header information of the first data packet encapsulated by the application function network element. Second packet header information may be the packet header information of the N3 data packet, the second packet header information may include the second identifier, and the second packet header information may be packet header information of the first data packet encapsulated by the second network device. The first data packet may be understood as a payload (payload) part of the N6 data packet or the N3 data packet.

The target identifier and the second identifier may alternatively not be in the packet header information corresponding to the first data packet. For example, the target identifier and the second identifier may be used as parameters independent of the first data packet.

It should be noted that, in the foregoing solution, the second network device may not determine the association relationship between the first data packet and the data packet of the second QoS flow. The foregoing solution may be understood as follows: After the second network device receives the first data packet from the application function network element, if the second network device identifies or parses that the first data packet corresponds to the identifier indicating that the first data packet is used as the synchronization reference for the data packet of the second QoS flow, in a process of sending the first data packet, the second network device may enable the identifier indicating that the first data packet is

used as the synchronization reference for the data packet of the second QoS flow to correspond to the first data packet.

The second identifier and the target identifier may be the same, or may be different.

Based on the foregoing solution, the target identifier may indicate that the first data packet is used as the reference data packet for the data packet in the synchronization flow. When identifying that the first data packet corresponds to the target identifier, the second network device may enable the first data packet sent to the first network device to correspond to the second identifier. Therefore, through the foregoing solution, the first network device can identify the reference data packet and the synchronization data packet that need to be synchronized. This further improves the effect of the synchronization between the data flows, so that user experience is improved. In addition, the second network device does not need to identify the reference data packet and the synchronization data packet in the foregoing solution, and data transmission efficiency is improved.

Optionally, in some other implementation scenarios of the foregoing embodiment, the first QoS flow and the second QoS flow are for transmission of at least two of data flows that are of a target service and that are with different modalities.

Based on the foregoing solution, according to the data transmission method provided in this embodiment of this application, an effect of synchronization between data flows with a plurality of modalities can be improved, so that user experience is improved.

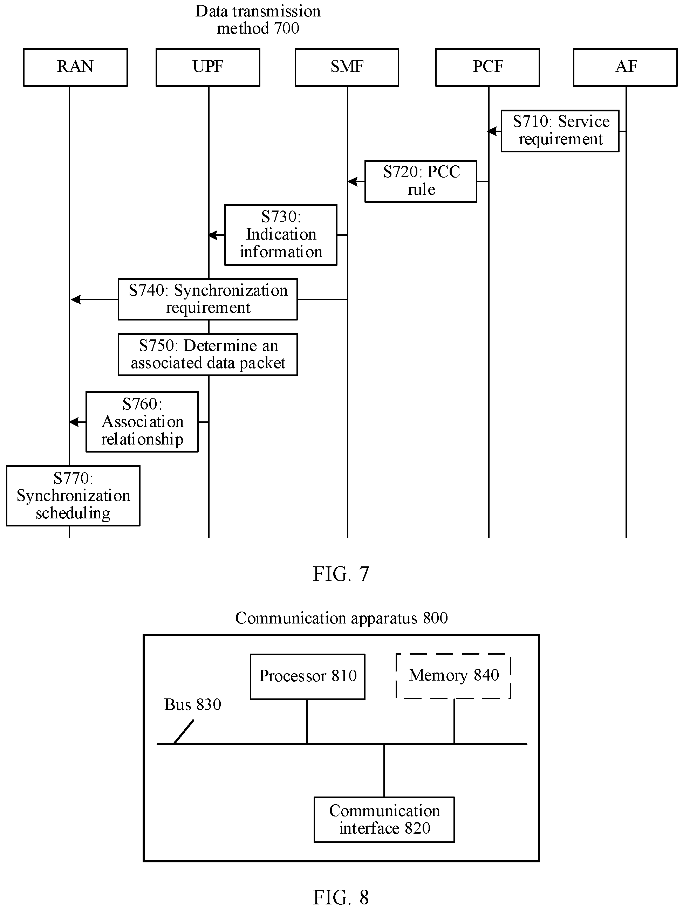

FIG. 7 is a schematic flowchart of still another data transmission method 700 according to an embodiment of this application.

Refer to FIG. 7. The data transmission method 700 relates to interaction between a plurality of core network elements and an access network device. FIG. 7 is merely an example, and does not constitute a limitation on this application. The following describes the method 700 with reference to FIG. 7.

S710: An AF sends service requirements of a plurality of SDFs to a PCF, where the service requirements include a transmission requirement corresponding to each SDF and a synchronization delay budget (synchronization delay budget, SyncDB) between the plurality of SDFs.

An example in which the plurality of SDFs are two SDFs is used for description. In the two SDFs, an SDF 1 and an SDF 2 may have different modalities. For example, the SDF 1 corresponds to the first QoS flow in the method 300, and the SDF 2 corresponds to the second QoS flow in the method 300.

The service requirements may be unidirectional. For example, a service requirement of the SDF 1 may be represented as {SDF 1: PSDB 1}, and a service requirement of the SDF 2 may be represented as {SDF 2: PSDB 2, SyncDB->SDF 1, associated time window->SDF 1}. The foregoing unidirectional requirements may be understood as that the SDF 1 can normally receive and send data without considering a synchronization issue, and the SDF 2 needs to consider how to be synchronized with the SDF 1.

The service requirements may alternatively be bidirectional. For example, a service requirement of the SDF 1 may be represented as {SDF 1: PSDB 1, SyncDB->SDF 2, associated time window->SDF 2}, and a service requirement of the SDF 2 may be represented as {SDF 2: PSDB 2, SyncDB->SDF 1, associated time window->SDF 1}. The foregoing bidirectional requirements may be understood as that the SDF 1 needs to consider how to be synchronized with the SDF 2, and the SDF 2 also needs to consider how to be synchronized with the SDF 1. Alternatively, it is understood as that, the SDF 1 is used as a reference, and the SDF 2 has a synchronization requirement relative to the SDF 1. In addition, the SDF 2 is used as a reference, and the SDF 1 also has a synchronization requirement relative to the SDF 2. That is, SDF 1 and SDF 2 both have the synchronization requirements relative to each other.

Alternatively, the service requirements may include no association time window. For example, a service requirement of the SDF 1 may be represented as {SDF 1: PSDB 1}, and a service requirement of the SDF 2 may be represented as {SDF 2: PSDB 2, SyncDB->SDF 1}. For another example, a service requirement of the SDF 1 may be represented as {SDF 1: PSDB 1, SyncDB->SDF 2}, and a service requirement of the SDF 2 may be represented as {SDF 2: PSDB 2, SyncDB->SDF 1}.

It should be noted that, in addition to being provided by the AF, the association time window may also be determined by a UPF. Alternatively, the association time window may be provided by another network element (for example, an NWDAF). For example, after the another network element determines the association time window, the another network element may send, to an SMF, information indicating the association time window, and the SMF sends, to the access network device, the information indicating the association time window.

The PSDB may alternatively be replaced with a packet delay budget (packet delay budget, PDB). Meanings of the PDB and the PSDB are similar. A difference lies in that the PSDB is for a PDU set while the PDB is for a packet.

A value of the SyncDB may be the foregoing preset duration. The SyncDB is the budget delay for synchronization between an SDF and a reference SDF. For example, when a data packet 11 in the reference SDF arrives at the access network device at a moment t0, a data packet 21 that is in the SDF and that is associated with the data packet 11 should be sent within the SyncDB starting from the moment t0.

A value of the association time window may be the first duration, the second duration, the third duration, the fourth duration, or the fifth duration. For example, a data packet that has a synchronization requirement relative to the reference

SDF and that is in another SDF that has an association relationship with the reference SDF may be determined based on the association time window. "Association time window->SDF 1" is used as an example. The SDF 1 is used as the reference SDF. The data packet 11 in the SDF 1 arrives at the access network device at the moment t0, or the access network device sends the data packet 11 at the moment t0. Assuming that the association time window is △t, there is an association relationship (in other words, a synchronization requirement) between a data packet in the SDF 2 within △t starting from the moment t0, that is, t0+△t, and the data packet 11.

In some embodiments, S710 may include: The AF sends the service requirements of the plurality of SDFs to a network exposure function (network exposure function, NEF), and the NEF sends the service requirements of the plurality of SDFs to the PCF.

The NEF is a network element that is located between a 5G core network and an external third-party application function (in some other embodiments, the NEF also includes some AFs) and that is responsible for managing external exposure of network data. The AF may directly send information to the PCF, or may send the information to the PCF via the NEF. The NEF may provide corresponding security assurance to ensure security of an external application to a 3GPP network, and provides functions such as QoS customization capability exposure, mobility status event subscription, and AF request distribution for the external application.

S720: The PCF generates a policy and charging control (policy and charging control, PCC) rule (rule) based on the service requirements, and sends the PCC rule to the SMF. The PCC rule includes SDF description information and the service requirements of the SDFs, namely, the service requirements provided by the AF in S710.

S730: The SMF sends indication information to the UPF, where the indication information is for determining an associated data packet in an associated QoS flow (flow).

For example, the SMF may send the indication information to the UPF by using an N4 session (session) establishment message or an N4 session modification message.

In this way, the UPF may send the indication information (namely, the indication information in S730) to the access network device via a GTP-U message. For a specific process, refer to the following S760 and S770. Details are not described herein.

S740: The SMF determines a synchronization requirement between a plurality of QoS flows according to the PCC rule, and sends the synchronization requirement to the access network device.

For example, the SMF may establish a QoS flow 1 (corresponding to the SDF 1) and a QoS flow 2 (corresponding to the SDF 2) according to the PCC rule, determine a synchronization requirement between the QoS flow 1 and the QoS flow 2, and then send the synchronization requirement to the access network device.

For example, the SMF sends an N2 SM message to the access network device, where a QoS profile of the N2 SM message includes the synchronization requirement, and the synchronization requirement includes a QoS flow identifier associated with a QoS flow and the SyncDB. A unidirectional requirement is used as an example. The synchronization requirement may be configured in a reference flow, or may be configured in a synchronization flow. For example:

QoS profile 1: {5QI, PSDB, SyncDB->QFI 2}, and QoS profile 2: {5QI, PSDB}; or
QoS profile 1: {5QI, PSDB}, and QoS profile 2: {5QI, PSDB, SyncDB<-QFI 1}.

The 5G quality of service identifier (5G QoS identifier, 5QI) is a standardized scalar, and 5QI values are in one-to-one correspondence with some 5G QoS characteristics. The QoS flow identifier (QoS flow id, QFI) is an identifier of a QoS flow, and the QFI may be generated by the SMF. The QFI and 5QI may be the same, or may be different.

The QoS profile 1 may be understood as a QoS profile corresponding to the QoS flow 1 (a QoS flow whose QFI is 1), and the QoS profile 2 may be understood as a QoS profile corresponding to the QoS flow 2 (a QoS flow whose QFI is 2).

First information may include the preset duration. For example, the first information may be the SyncDB. The first information may also indicate that there is an association relationship between the plurality of QoS flows. For example, the first information may be SyncDB->QFI 2 or SyncDB<-QFI 1. Alternatively, the first information may be configuration information of the QoS flow. For example, the first information may be the QoS profile 1 or profile 2.

In addition, the N2 SM message sent by the SMF to the access network device may further include another piece of indication information. The another piece of indication information indicates the RAN to perform synchronization between the QoS flow 1 and the QoS flow 2 based on at least two associated data packets, and the at least two associated data packets are data packets having the association relationship in the QoS flow 1 and the QoS flow 2. In other words, the another piece of indication information indicates the RAN to perform synchronization between the plurality of QoS flows at a granularity of associated data packets. In this way, the access network device may obtain, by parsing the GTP-U message from the UPF, information about data packets having the association relationship in different QoS flows. Alternatively, the access network device may identify, by using the association time window, data packets having the association relationship in different QoS flows.

The another piece of indication information may be the first information. In other words, the first information may have a function of the another piece of indication information.

It should be noted that the SMF may send the N2 SM message to the access network device via an AMF. For example, the SMF sends Namf_Communication_N1N2MessageTansfer including the N2 SM message to the AMF, and the AMF sends the N2 SM message to the access network device via an N2 PDU session request message. The AMF does not parse the N2 SM message, and only performs transparent transmission.

S750: After receiving downlink data, the UPF determines the data packet having the association relationship in the QoS flow having the association relationship.

For example, after receiving the data packet 21 in the QoS flow 2, the UPF may determine which one of a plurality of data packets (the data packet 11, a data packet 12, and a data packet 13) received in the QoS flow 1 having the association relationship with the data packet 21 is associated with the data packet 21.

Specifically, a plurality of manners may be included, which are separately described below.

For example, refer to the embodiment related to (a) in FIG. 6. This is similar to the solution in the foregoing embodiment, and a difference lies in that a data packet herein is an N6 data packet. Therefore, a first identifier may be carried in an N6 packet header. In addition, an execution body herein is the UPF instead of the access network device. In addition, if this manner is used, the associated time window does not need to be provided in S710.

For another example, refer to the embodiment related to (c) in FIG. 6. This is similar to the solution in the foregoing embodiment, and a difference lies in that a data packet herein is an N6 data packet. Therefore, a second identifier may be carried in an N6 packet header. In addition, an execution body herein is the UPF instead of the access network device. In addition, if this manner is used, the associated time window does not need to be provided in S710.

For still another example, refer to the embodiment related to (c) in FIG. 6. This is similar to the solution in the foregoing embodiment, and a difference lies in that an execution body herein is the UPF instead of the access network device.

S760: The UPF provides, via the GTP-U message, the access network device with the association relationship between the data packets having the synchronization requirement in the different QoS flows.

For example, refer to the embodiment related to (a), (b), or (c) in FIG. 6. This is similar to the solution in the foregoing embodiment, and a difference lies in that an execution body herein is the UPF in a core network device.

S770: After receiving data packets, the access network device determines, based on receiving time of the reference data packet, receiving time of a synchronization data packet, a synchronization requirement in QoS configuration information, and a PDB/PSDB of the synchronization data packet, a transmission delay of a data packet having a synchronization requirement. In other words, the access network device performs corresponding steps in the foregoing method embodiments.

Based on the foregoing solution, the preset duration may be sent by the SMF to the access network device, and the access network device determines a synchronization requirement between data packets having the synchronization requirement in different data flows. The association time window may be sent by the SMF to the UPF, and the UPF may determine, based on the association time window, the data packets having the synchronization requirement in the different data flows.

This application further provides a data transmission method, including: An application function network element sends a synchronization requirement between a first service flow and a second service flow to a policy control network element. The policy control network element generates a synchronization policy based on the synchronization requirement. The policy control network element sends the synchronization policy to a session management network element. The session management network element generates a synchronization configuration according to the synchronization policy. The session management network element sends the synchronization configuration to an access network device. In other words, the application function network element configures a synchronization requirement between a first service flow and a second service flow for an access network device.

In some embodiments, the application function network element initiates data transmission of the first service flow and the second service flow to a terminal device, the first service flow and the second service flow arrive at the terminal device through a user plane function network element and the access network device, and the first service flow and the second service flow satisfy the synchronization requirement.

In some embodiments, the application function network element initiates data transmission of a first data packet and a second data packet to the terminal device, the first data packet and the second data packet arrive at the terminal device through the user plane function network element and the access network device, and the first data packet and the second data packet satisfy the synchronization requirement, where the first data packet is associated with the second data packet, the first data packet is transmitted by using the first service flow, and the second data packet is transmitted by using the second service flow.

In some embodiments, the application function network element receives a first service request message or a first service subscription message from the terminal device, and the first service request corresponds to a first service or a first application. The first service or the first application corresponds to at least two service flows, including the first service flow and the second service flow. That is, execution of the first service or the first application needs the application function network element to perform transmission of the at least two service flows. The first service request message or the first

service subscription message further carries a first identifier, the first identifier indicates the first service or the first application, and the first service or the first application corresponds to a first provider. For example, the service includes but is not limited to services such as a game, virtual reality (virtual reality, VR), augmented reality (augmented reality, AR), and extended reality (extended reality, XR). A service flow corresponding to the service includes but is not limited to multi-modality service flows such as an auditory service flow, a visual service flow, and a tactile service flow. The provider is a provider that provides the service.

In some embodiments, the application function network element sends the synchronization requirement between the first service flow and the second service flow to the policy control network element in response to the first service request message or the first service subscription message.

In some embodiments, the application function network element spontaneously sends the synchronization requirement between the first service flow and the second service flow to the policy control network element.

This application further provides a data transmission method, including: receiving a first message from a first terminal device through a first interface, where the first message corresponds to a first service or a first application; determining, based on the first message, a first synchronization policy and at least two service flows that correspond to the first service or the first application; and completing synchronization configuration according to a first synchronization policy, and sending the at least two service flows to a first terminal device or another terminal device.

For example, the first message may be a first service request message or a first service subscription message, and the at least two service flows sent to the first terminal device or another terminal device satisfy a synchronization requirement of the first service or the first application.

In some embodiments, an application function network element receives the first message, and determines, based on the first service or the first application corresponding to the first message, the at least two service flows corresponding to the first service or the first application and synchronization requirement information. The application function network element further sends, to a policy control network element, the at least two service flows corresponding to the first service or the first application and the synchronization requirement information. The policy control network element generates synchronization policy information based on the synchronization requirement information, and sends the synchronization policy information to a session management network element. The session management network element generates synchronization configuration information based on the received information, and sends the synchronization configuration information to an access network device. The access network device completes configuration based on the synchronization configuration information, synchronizes the at least two received service flows, and then sends the at least two service flows to the terminal through a second interface.

In some embodiments, the synchronization configuration information generated by the session management network element indicates synchronization between two data packets having an association relationship in the at least two service flows. Transmission of the two data packets is separately performed by using the at least two service flows, and is not performed by using a same service flow.

In some embodiments, the application function network element, the policy control network element, the session management network element, and the access network device are configured to implement the solutions in the foregoing embodiments.

In some embodiments, the first synchronization policy is determined based on the synchronization requirement information. The synchronization requirement information may be a specific value, a value interval, a delay threshold, or qualitative descriptions (for example, "low" or "medium").

Optionally, in some embodiments, the synchronization information may be preconfigured.

Optionally, in some embodiments, the first message further carries a first requirement, and the requirement includes a delay requirement. The delay requirement may alternatively be understood as the synchronization requirement, and indicates synchronization information between data flows of a corresponding service.

In some embodiments, the application function network element further receives data, and the data corresponds to the at least two service flows. The data may be received through the first interface, or may be received through the preset second interface.

In some embodiments, the application function network element sends prestored data to the policy control network element.

The following describes apparatus embodiments corresponding to the method embodiments of this application. The following merely briefly describes apparatuses. For specific implementation steps and details of the solutions, refer to the foregoing method embodiments.

To implement functions in the methods provided in this application, both a terminal device and a network device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

FIG. 8 is a schematic block diagram of a communication apparatus 800 according to an embodiment of this application. The communication apparatus 800 includes a processor 810 and a communication interface 820. The processor 810 and the communication interface 820 may be connected to each other through a bus 830. The communication apparatus 800 may be a first network device, a second network device, or a third network device.

Optionally, the communication apparatus 800 may further include a memory 840. The memory 840 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 840 is configured to store related instructions and data. The memory 840 and the processor 810 may be integrated together or separately disposed.

The processor 810 may be one or more central processing units (central processing units, CPUs). When the processor 810 is one CPU, the CPU may be a single-core CPU, or may be a multi-core CPU. The processor 810 may be a signal processor, a chip, another integrated circuit that can implement the methods in this application, or a part of circuits that are in the foregoing processor, chip, or integrated circuit and that are for a processing function. In addition, the communication interface 820 may alternatively be an input/output interface. The input/output interface is configured to input or output a signal or data, or may be an input/output circuit.

When the communication apparatus 800 is the first network device, for example, the processor 810 is configured to perform the following operations: receiving first information, where the first information indicates a preset duration, and the preset duration corresponds to synchronization delay information between a first QoS flow and a second QoS flow; sending a first data packet, where the first data packet is transmitted by using the first QoS flow, and a moment at which the first data packet is sent by the first network device is a first moment; and sending a second data packet based on the first moment and the preset duration, where the second data packet is transmitted by using the second QoS flow, and the second data packet is associated with the first data packet.

When the communication apparatus 800 is the second network device, for example, the processor 810 is configured to perform the following operations: obtaining second information, where the second information indicates an association relationship between a data packet of a first QoS flow and a data packet of a second QoS flow; and sending the second information to a first network device.

When the communication apparatus 800 is the third network device, for example, the processor 810 is configured to perform the following operations: obtaining first information, where the first information indicates a preset duration, and the preset duration corresponds to synchronization delay information between a first QoS flow and a second QoS flow; and sending the first information to a first network device.

The foregoing content is merely used as an example for description. When the communication apparatus 800 is the first network device, the second network device, or the third network device, the communication apparatus 800 is responsible for performing the methods or steps related to the first network device, the second network device, or the third network device in the foregoing method embodiments.

It may be understood that, when the communication apparatus 800 is the first network device, the second network device, or the third network device, the communication interface 820 may also be referred to as a transceiver. The transceiver may include a transmitter and a receiver. The transmitter is configured to perform a sending operation, and the receiver is configured to perform a receiving operation. For example, the processor 810 is configured to control the transceiver to receive and/or send the signal.

It should be noted that the communication apparatus 800 may include the transmitter but not include the receiver. Alternatively, the communication apparatus 800 may include the receiver but not include the transmitter. This may specifically depend on whether the foregoing solutions performed by the communication apparatus 800 include a sending action and a receiving action.

The foregoing descriptions are an example for description. For specific content, refer to the content shown in the foregoing method embodiments. For implementation of each operation in FIG. 8, correspondingly refer to the corresponding descriptions of the method embodiments shown in FIG. 3 to FIG. 7.

For example, the communication apparatus 800 may be configured to perform the solution shown in FIG. 3 or FIG. 5.

When the communication apparatus 800 is the first network device, the communication interface 820 is configured to receive first information, where the first information indicates a preset duration, and the preset duration corresponds to synchronization delay information between a first quality of service QoS flow and a second QoS flow; the communication interface 820 is further configured to send a first data packet, where the first data packet is transmitted by using the first QoS flow, and a moment at which the first data packet is sent by the first network device is a first moment; and the communication interface 820 is further configured to send a second data packet based on the first moment and the preset duration, where the second data packet is transmitted by using the second QoS flow, and the second data packet is associated with the first data packet.

When the communication apparatus 800 is the second network device, the processor 810 is configured to obtain second information, where the second information indicates an association relationship between a data packet of a first

QoS flow and a data packet of a second QoS flow; and the communication interface 820 is configured to send the second information to a first network device.

When the communication apparatus 800 is the second network device, the processor 810 is configured to obtain first information, where the first information indicates a preset duration, and the preset duration corresponds to synchronization delay information between a first QoS flow and a second QoS flow; and the communication interface 820 is configured to send the first information to a first network device.

For details of other implementations, refer to the detailed descriptions of the embodiment shown in FIG. 3 or FIG. 5. Details are not described herein again. It should be understood that a specific process in which the components perform the foregoing corresponding processes has been described in detail in the foregoing method embodiments. For brevity, details are not described herein again.

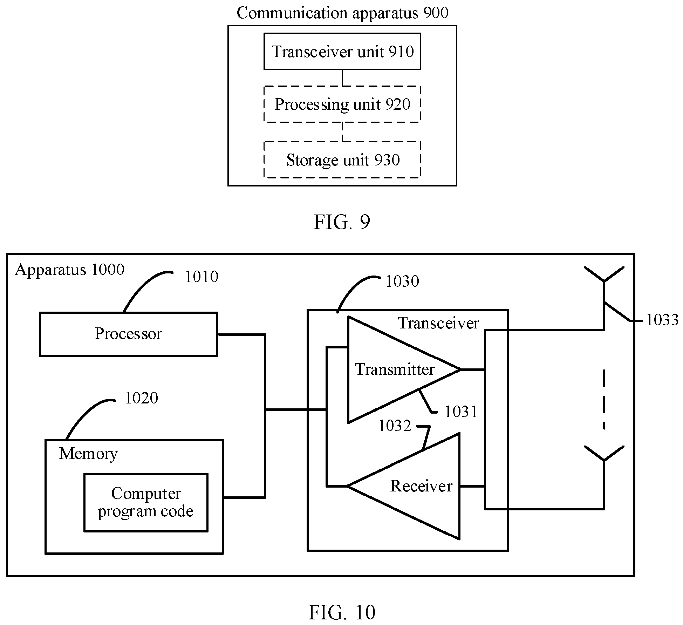

FIG. 9 is a schematic block diagram of another communication apparatus 900 according to an embodiment of this application. The communication apparatus 900 may be a first network device, a second network device, or a third network device, or may be a chip or a module in the first network device, the second network device, or the third network device, and is configured to implement the methods in the embodiments shown in FIG. 3 to FIG. 8. For details, refer to the related descriptions in the foregoing method embodiments.

The communication apparatus 900 includes a transceiver unit 910. The following describes the transceiver unit 910 by using examples.

The transceiver unit 910 may include a sending unit and a receiving unit. The sending unit is configured to perform a sending action of the communication apparatus, and the receiving unit is configured to perform a receiving action of the communication apparatus. For ease of description, in embodiment of this application, the sending unit and the receiving unit are combined into one transceiver unit. Unified descriptions are provided herein. Details are not described hereinafter again. The transceiver unit 910 may implement a corresponding communication function. The transceiver unit 910 may also be referred to as a communication interface or a communication module.

It should be noted that the communication apparatus 900 may include the sending unit but not include the receiving unit. Alternatively, the communication apparatus 900 may include the receiving unit but not include the sending unit. This may specifically depend on whether the foregoing solutions performed by the communication apparatus 900 include a sending action and a receiving action.

When the communication apparatus 900 is the first network device, for example, the transceiver unit 910 is configured to receive first information.

Optionally, the communication apparatus 900 may further include a processing unit 920, configured to perform content related to steps such as processing and coordination of the first network device.

When the communication apparatus 900 is the second network device, for example, the transceiver unit 910 is configured to send second information to a first network device.

Optionally, the communication apparatus 900 may further include a processing unit 920, configured to perform content related to steps such as processing and coordination of the second network device.

When the communication apparatus 900 is the third network device, for example, the transceiver unit 910 is configured to send first information to a first network device.

Optionally, the communication apparatus 900 may further include a processing unit 920, configured to perform content related to steps such as processing and coordination of the third network device.

The foregoing content is merely used as an example for description. When the communication apparatus 900 is the first network device, the second network device, or the third network device, the communication apparatus 900 is responsible for performing the methods or steps related to the first network device, the second network device, or the third network device in the foregoing method embodiments.

Optionally, the communication apparatus 900 further includes a storage unit 930. The storage unit 930 is configured to store a program or code for performing the foregoing methods. In other words, the storage unit 930 may be configured to store instructions and/or data, and the processing unit 920 may read the instructions and/or the data in the storage unit 930, so that the communication apparatus 900 implements the foregoing method embodiments. For example, the communication apparatus 900 may be configured to perform the solution shown in FIG. 3.

When the communication apparatus 900 is the first network device, the transceiver unit 910 is configured to receive first information, where the first information indicates a preset duration, and the preset duration corresponds to synchronization delay information between a first QoS flow and a second QoS flow; the transceiver unit 910 is further configured to send a first data packet, where the first data packet is transmitted by using the first QoS flow, and a moment at which the first data packet is sent by the first network device is a first moment; and the transceiver unit 910 is further configured to send a second data packet based on the first moment and the preset duration, where the second data packet is transmitted by using the second QoS flow, and the second data packet is associated with the first data packet.

When the communication apparatus 900 is the second network device, the processing unit 920 is configured to second information, where the second information indicates an association relationship between a data packet of a first QoS flow and a data packet of a second QoS flow; and the transceiver unit 910 is configured to send the second information

to a first network device.

When the communication apparatus 900 is the third network device, the processing unit 920 is configured to obtain first information, where the first information indicates a preset duration, and the preset duration corresponds to synchronization delay information between a first QoS flow and a second QoS flow; and the transceiver unit 910 is configured to send the first information to a first network device.

For details of other implementations, refer to the detailed descriptions of the embodiment shown in FIG. 3 or FIG. 5. Details are not described herein again. It should be understood that a specific process in which the components perform the foregoing corresponding processes has been described in detail in the foregoing method embodiments. For brevity, details are not described herein again.

The apparatus embodiments shown in FIG. 8 and FIG. 9 are for implementing the content in FIG. 3 to FIG. 8. For specific execution steps and methods of the apparatuses shown in FIG. 8 and FIG. 9, refer to the content in the foregoing method embodiments.

This application further provides an apparatus 1000. The apparatus 1000 may be a first network device, or a processor or a chip in the first network device. The apparatus 1000 may be configured to perform the operations performed by the first network device in the foregoing method embodiments.

When the apparatus 1000 is the first network device, FIG. 10 is a simplified diagram of a structure of a first network device. As shown in FIG. 10, the first network device includes a processor, a memory, and a transceiver. The memory may store computer program code, and the transceiver includes a transmitter 1031, a receiver 1032, a radio frequency circuit (not shown in the figure), and an antenna 1033.

The processor is mainly configured to: process a communication protocol and communication data, control the first network device, execute a software program, process data of the software program, and so on.

The memory is mainly configured to store the software program and data.

The radio frequency circuit is mainly configured to: perform conversion between a baseband signal and a radio frequency signal, and process the radio frequency signal.

The antenna is mainly configured to receive and send a radio frequency signal in a form of an electromagnetic wave.

When data needs to be sent, the processor outputs the baseband signal to the radio frequency circuit after performing baseband processing on the to-be-sent data. Then, the radio frequency circuit performs radio frequency processing on the baseband signal, and then sends the radio frequency signal to the outside in a form of an electromagnetic wave through the antenna. When data is sent to the first network device, the radio frequency circuit receives the radio frequency signal through the antenna. The radio frequency circuit converts the radio frequency signal into the baseband signal, and outputs the baseband signal to the processor. The processor converts the baseband signal into data, and processes the data. For ease of description, FIG. 10 shows only one memory, one processor, and one transceiver. In an actual product of the first network device, there may be one or more processors and one or more memories. The memory may also be referred to as a storage medium, a storage device, or the like. The memory may be disposed independent of the processor, or may be integrated with the processor. This is not limited in this embodiment of this application.

The part 1010 and the part 1020 may include one or more boards, and each board may include one or more processors and one or more memories. The processor is configured to read and execute a program in the memory, to implement a baseband processing function and control the apparatus 1000. If there are a plurality of boards, the boards may be interconnected with each other, to enhance a processing capability. In an optional implementation, the plurality of boards may share one or more processors, the plurality of boards share one or more memories, or the plurality of boards simultaneously share one or more processors.

In embodiments of this application, the antenna and the radio frequency circuit that have a transceiver function may be considered as a transceiver module of the first network device, and the processor that has a processing function may be considered as a processing module of the first network device.

As shown in FIG. 10, the first network device includes the processor 1010, the memory 1020, and the transceiver 1030. The processor 1010 may also be referred to as a processing unit, a processing board, a processing module, a processing apparatus, or the like. The transceiver 1030 may also be referred to as a transceiver unit, a transceiver apparatus, or the like.

Optionally, a component configured to implement a receiving function in the transceiver 1030 is considered as a receiving module, and a component configured to implement a sending function in the transceiver 1030 is considered as a sending module. That is, the transceiver 1030 includes a receiver and a transmitter. The transceiver may also be sometimes referred to as a transceiver module, a transceiver circuit, or the like. The receiver may also be sometimes referred to as a receiving module, a receiving circuit, or the like. The transmitter may also be sometimes referred to as a transmitting module, a transmitting circuit, or the like.

The processor 1010 is configured to perform a processing action on the first network device side in the embodiment shown in FIG. 3. The transceiver 1030 is configured to perform receiving and sending actions on the first

network device side in the embodiment shown in FIG. 3.

When the communication apparatus 1000 is the chip, the chip includes a processor, a memory, and a transceiver. The transceiver may be an input/output circuit or a communication interface. The processor may be a processing module, a microprocessor, or an integrated circuit integrated on the chip. A sending operation performed by the first network device in the foregoing method embodiments may be understood as an output of the chip, and a receiving operation performed by the first network device in the foregoing method embodiments may be understood as an input of the chip.

This application further provides an apparatus 1100. The apparatus 1100 may be a second network device, or may be a chip in the second network device. The apparatus 1100 may be configured to perform the operations performed by the second network device in the embodiments shown in FIG. 3 to FIG. 7.

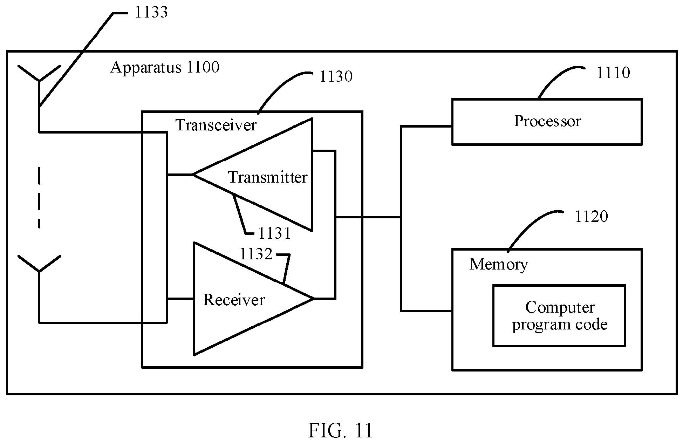

FIG. 11 is a simplified diagram of a structure. The apparatus 1100 includes a part 1110, a part 1120, and a part 1130.

The part 1110 is mainly for baseband processing and the like. The part 1110 is usually a control center of the apparatus 1100, may be usually referred to as a processor, and is configured to control the apparatus 1100 to perform a processing operation on a second network device side or a third network device side in the foregoing method embodiments.

The part 1120 is mainly configured to store computer program code and data.

The part 1130 is mainly configured to: receive and send a radio frequency signal, and perform conversion between the radio frequency signal and a baseband signal. The part 1130 may be usually referred to as a transceiver module, a transceiver, a transceiver circuit, or the like. The transceiver module in the part 1130 may also be referred to as a transceiver or the like, and includes an antenna 1133 and a radio frequency circuit (not shown). The radio frequency circuit is mainly configured to perform radio frequency processing. Optionally, in the part 1130, a component configured to implement a receiving function may be considered as a receiver, and a component configured to implement a sending function may be considered as a transmitter. That is, the part 1130 includes a receiver 1132 and a transmitter 1131. The receiver may also be referred to as a receiving module, a receiving circuit, or the like, and the transmitter may be referred to as a transmitting module, a transmitting circuit, or the like.

The part 1110 and the part 1120 may include one or more boards, and each board may include one or more processors and one or more memories. The processor is configured to read and execute a program in the memory, to implement a baseband processing function and control the apparatus 1000. If there are a plurality of boards, the boards may be interconnected with each other, to enhance a processing capability. In an optional implementation, the plurality of boards may share one or more processors, the plurality of boards share one or more memories, or the plurality of boards simultaneously share one or more processors.

For example, in an implementation, the transceiver module in the part 1130 is configured to perform a process related to receiving and sending performed by the second network device or the third network device in the embodiment shown in FIG. 3 or FIG. 5. The processor in the part 1110 is configured to perform a process related to processing performed by the second network device or the third network device in the embodiment shown in FIG. 3 or FIG. 5.

When the apparatus 1100 is the chip, the chip includes a transceiver, a memory, and a processor. The transceiver may be an input/output circuit or a communication interface. The processor is a processor, a microprocessor, or an integrated circuit integrated on the chip. A sending operation performed by the second network device or the third network device in the foregoing method embodiments may be understood as an output of the chip, and a receiving operation performed by the second network device or the third network device in the foregoing method embodiments may be understood as an input of the chip.

This application further provides a chip, including a processor, configured to invoke instructions from a memory and run the instructions stored in the memory, to cause a communication apparatus on which the chip is installed to perform the methods in the foregoing examples.

This application further provides another chip, including an input interface, an output interface, and a processor. The input interface, the output interface, and the processor are connected to each other through an internal connection path. The processor is configured to execute code in a memory. When the code is executed, the processor is configured to perform the methods in the foregoing examples. Optionally, the chip further includes the memory. The memory is configured to store a computer program or the code.

This application further provides a processor, configured to be coupled to a memory, and configured to perform the method and the function related to the first network device, the second network device, or the third network device in any one of the foregoing embodiments.

Another embodiment of this application provides a computer program product including a computer program or instructions. When the computer program product runs on a computer, the methods in the foregoing embodiments are implemented.

This application further provides a computer program. When the computer program runs on a computer, the methods in the foregoing embodiments are implemented.

Another embodiment of this application provides a computer-readable storage medium. The computer-readable

storage medium stores a computer program. When the computer program is executed by a computer, the methods in the foregoing embodiments are implemented.

A person of ordinary skill in the art may be aware that, with reference to the units and algorithm steps in the examples described in embodiments disclosed in this specification, this application can be implemented by electronic hardware or a combination of computer software and the electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in an electrical, mechanical, or another form.

The units described as separate parts may or may not be physically separate, and parts displayed as units may or may not be physical units, that is, may be located at one location, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions in this application essentially, in other words, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps in the methods in embodiments of this application. The foregoing storage medium includes any medium that can store program code, such as a USB flash drive, a removable hard disk, a read-only memory ROM, a random access memory RAM, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

**1.** A data transmission method, applied to a first network device, and comprising:

receiving first information, wherein the first information indicates synchronization delay information between a first quality of service QoS flow and a second QoS flow;
sending a first data packet at a first moment, wherein the first data packet is transmitted by using the first QoS flow; and
sending a second data packet based on the first moment and the synchronization delay information, wherein the second data packet is transmitted by using the second QoS flow, and the second data packet is associated with the first data packet.

**2.** The method according to claim 1, wherein the method further comprises:
receiving second information, wherein the second information is for determining an association relationship between a data packet of the first QoS flow and a data packet of the second QoS flow.

**3.** The method according to claim 2, wherein the first data packet corresponds to the second information, the second data packet corresponds to the second information, and the method further comprises:
when the second information corresponding to the first data packet is the same as the second information corresponding to the second data packet, determining that the second data packet is associated with the first data

packet.

4. The method according to claim 2, wherein the first data packet corresponds to the second information, and the method further comprises:
receiving the first data packet from a second network device, wherein the second information further indicates that the first data packet is a synchronization reference for the data packet of the second QoS flow.

5. The method according to claim 4, wherein the method further comprises:
when the first network device receives the second data packet from the second network device after the first network device receives the first data packet, determining that the second data packet is associated with the first data packet.

6. The method according to claim 4 or 5, wherein the second network device is a user plane function network element.

7. The method according to claim 2, wherein the second information further indicates a first duration, and the method further comprises:
determining the association relationship between the data packet of the first QoS flow and the data packet of the second QoS flow based on a moment at which the first network device receives the data packet of the first QoS flow, the first duration, and a moment at which the first network device receives the data packet of the second QoS flow.

8. The method according to claim 7, wherein the first duration is determined based on first jitter information and/or second jitter information, the first jitter information is related to the first QoS flow, and the second jitter information is related to the second QoS flow.

9. The method according to claim 7, wherein the determining the association relationship between the data packet of the first QoS flow and the data packet of the second QoS flow based on the moment at which the first network device receives the data packet of the first QoS flow, the first duration, and the moment at which the first network device receives the data packet of the second QoS flow comprises:

determining a second duration based on first jitter information and/or second jitter information, and based on the first duration, wherein the first jitter information is related to the first QoS flow, and the second jitter information is related to the second QoS flow; and
when the first network device receives the second data packet within the second duration starting from receiving the first data packet by the first network device, determining that the second data packet is associated with the first data packet.

10. The method according to any one of claims 1 to 9, wherein the synchronization delay information between the first QoS flow and the second QoS flow corresponds to a preset duration, and the sending the second data packet based on the first moment and the synchronization delay information comprises:
sending the second data packet within the preset duration starting from the first moment.

11. The method according to any one of claims 1 to 10, wherein the first QoS flow and the second QoS flow are for transmission of at least two of data flows that are of a target service and that are with different modalities.

12. The method according to any one of claims 1 to 11, wherein the first information is carried in configuration information of the first QoS flow and/or configuration information of the second QoS flow.

13. The method according to any one of claims 1 to 12, wherein the first information further indicates the first network device to perform synchronization between the first QoS flow and the second QoS flow based on at least two associated data packets, and the at least two associated data packets are data packets having the association relationship in the first QoS flow and the second QoS flow.

14. A data transmission method, applied to a second network device, and comprising:

obtaining second information, wherein the second information indicates an association relationship between a data packet of a first quality of service QoS flow and a data packet of a second QoS flow; and
sending the second information to a first network device.

15. The method according to claim 14, wherein a first data packet corresponds to the second information, a second data

packet corresponds to the second information, and the sending the second information to the first network device comprises:
sending the first data packet and the second data packet to the first network device, wherein the first data packet is transmitted by using the first QoS flow, and the second data packet is transmitted by using the second QoS flow.

**16.** The method according to claim 14, wherein the second information further indicates at least one data packet as a synchronization reference for the data packet of the second QoS flow, and the sending the second information to the first network device comprises:
sending a first data packet to the first network device, wherein the first data packet corresponds to the second information.

**17.** The method according to any one of claims 14 to 16, wherein the method further comprises:

receiving indication information from a third network device, wherein the indication information is for triggering determining of the association relationship between the data packet of the first QoS flow and the data packet of the second QoS flow; and
wherein the obtaining the second information comprises: determining the second information based on the association relationship between the data packet of the first QoS flow and the data packet of the second QoS flow.

**18.** The method according to claim 17, wherein the method further comprises:
receiving a target identifier from an application function network element, wherein the target identifier is for determining the association relationship between the data packet of the first QoS flow and the data packet of the second QoS flow.

**19.** The method according to claim 18, wherein the method further comprises:

receiving the first data packet and the second data packet from the application function network element, wherein the first data packet corresponds to the target identifier, and the second data packet corresponds to the target identifier; and
when the target identifier corresponding to the second data packet is the same as the target identifier corresponding to the first data packet, determining that the first data packet is associated with the second data packet.

**20.** The method according to claim 18 or 19, wherein the target identifier further indicates the at least one data packet as the synchronization reference for the data packet of the second QoS flow, and the receiving the target identifier from the application function network element comprises:

receiving the first data packet, wherein the first data packet corresponds to the target identifier; and
when the second network device receives the second data packet after the second network device receives the first data packet, determining that the second data packet is associated with the first data packet.

**21.** The method according to claim 17, wherein the indication information further indicates a third duration, and the method further comprises:
determining the association relationship between the data packet of the first QoS flow and the data packet of the second QoS flow based on a moment at which the second network device receives the data packet of the first QoS flow, the third duration, and a moment at which the second network device receives the data packet of the second QoS flow.

**22.** The method according to claim 21, wherein the determining the association relationship between the data packet of the first QoS flow and the data packet of the second QoS flow based on the moment at which the second network device receives the data packet of the first QoS flow, the third duration, and the moment at which the second network device receives the data packet of the second QoS flow comprises:
when the second network device receives the second data packet within the third duration starting from receiving the first data packet by the second network device, determining that the second data packet is associated with the first data packet.

**23.** The method according to claim 22, wherein the third duration is determined based on first jitter information and/or second jitter information, the first jitter information is related to the first QoS flow, and the second jitter information is

related to the second QoS flow.

**24.** The method according to claim 21, wherein the determining the association relationship between the data packet of the first QoS flow and the data packet of the second QoS flow based on the moment at which the second network device receives the data packet of the first QoS flow, the third duration, and the moment at which the second network device receives the data packet of the second QoS flow comprises:
determining a fourth duration based on first jitter information and/or second jitter information, and the third duration, wherein the first jitter information is related to the first QoS flow, and the second jitter information is related to the second QoS flow; and when the second network device receives the second data packet within the fourth duration starting from receiving the first data packet by the second network device, determining that the second data packet is associated with the first data packet.

**25.** The method according to claim 16, wherein the method further comprises:

receiving the first data packet from an application function network element; and
determining that the first data packet corresponds to a target identifier, wherein the target identifier indicates that the first data packet is a synchronization reference for the data packet of the second QoS flow; and the sending the first data packet to the first network device comprises:
sending the first data packet to the first network device, wherein the first data packet corresponds to the second information.

**26.** The method according to any one of claims 14 to 25, wherein the first QoS flow and the second QoS flow are for transmission of at least two of data flows that are of a target service and that are with different modalities.

**27.** A data transmission method, applied to a third network device, and comprising:

obtaining first information, wherein the first information indicates synchronization delay information between a first quality of service QoS flow and a second QoS flow; and
sending the first information to a first network device.

**28.** The method according to claim 27, wherein indication information is for triggering a second network device to determine an association relationship between a data packet of the first QoS flow and a data packet of the second QoS flow, and the method further comprises:
sending the indication information to the second network device.

**29.** The method according to claim 28, wherein the indication information further indicates a third duration, and the third duration is for determining the association relationship between the data packet of the first QoS flow and the data packet of the second QoS flow.

**30.** The method according to claim 29, wherein the method further comprises:

receiving third information from an application function network element, wherein the third information indicates a fifth duration; and
determining the third duration based on first jitter information and/or second jitter information, and the fifth duration, wherein the first jitter information is related to the first QoS flow, and the second jitter information is related to the second QoS flow.

**31.** The method according to claim 27 or 28, wherein second information indicates a first duration, the first duration is for determining the association relationship between the data packet of the first QoS flow and the data packet of the second QoS flow, and the method further comprises:
sending the second information to the first network device.

**32.** The method according to claim 31, wherein the method further comprises:

receiving third information from an application function network element, wherein the third information indicates a fifth duration; and
determining the first duration based on first jitter information and/or second jitter information, and the fifth duration, wherein the first jitter information is related to the first QoS flow, and the second jitter information is related to the

second QoS flow.

**33.** The method according to claim 30 or 32, wherein the method further comprises:
receiving fourth information from the second network device, wherein the fourth information indicates the first jitter information and/or the second jitter information.

**34.** The method according to any one of claims 27 to 33, wherein the first QoS flow and the second QoS flow are for transmission of at least two of data flows that are of a target service and that are with different modalities.

**35.** The method according to any one of claims 27 to 34, wherein the first information is carried in configuration information of the first QoS flow and/or configuration information of the second QoS flow.

**36.** The method according to any one of claims 27 to 35, wherein the first information further indicates the first network device to perform synchronization between the first QoS flow and the second QoS flow based on at least two associated data packets, and the at least two associated data packets are data packets having the association relationship in the first QoS flow and the second QoS flow.

**37.** A communication apparatus, comprising a processing circuit and an input/output interface, wherein the input/output interface is configured to input and/or output a signal; and the processing circuit is configured to perform the method according to any one of claims 1 to 13, the processing circuit is configured to perform the method according to any one of claims 14 to 26, or the processing circuit is configured to perform the method according to any one of claims 27 to 36.

**38.** A communication apparatus, comprising at least one module, wherein the at least one module is configured to perform the method according to any one of claims 1 to 13, the at least one module is configured to perform the method according to any one of claims 14 to 26, or the at least one module is configured to perform the method according to any one of claims 27 to 36.

**39.** A communication system, comprising a first network device, a second network device, and a third network device, wherein the first network device is configured to perform the method according to any one of claims 1 to 13, the second network device is configured to perform the method according to any one of claims 14 to 26, and the third network device is configured to perform the method according to any one of claims 27 to 36.

**40.** A computer-readable storage medium, wherein the computer-readable storage medium stores a computer program or instructions; and when the computer program or the instructions are run on a computer, the method according to any one of claims 1 to 13 is caused to be performed, the method according to any one of claims 14 to 26 is caused to be performed, or the method according to any one of claims 27 to 36 is caused to be performed.

**41.** A computer program product, comprising computer program code, wherein when the computer program code is run, the method according to any one of claims 1 to 13 is implemented, the method according to any one of claims 14 to 26 is implemented, or the method according to any one of claims 27 to 36 is implemented.

NSSF
NEF
NRF
PCF
UDM
AF
Nnssf
Nnef
Nnrf
Npcf
Nudm
Naf
Nausf
Namf
Nsmf
AUSF
AMF
SMF
N1
N2
N4
UE
(R)AN
N3
UPF
N6
DN
Data flow 1
11
12
13
14
15
Sending time
Data flow 2
21
22
Sending time

FIG. 1

FIG. 2

Data transmission method 300
First network device
Third network device
S310: Obtain first information
S320: First information
S330: Send a first data packet
S340: Send a second data packet

FIG. 3

First data packet
First QoS flow
11
12
13
14
15
Sending time
Second QoS flow
21
22
Receiving time
First moment
Second data packet
Latest sending moment
Preset duration
(a)
First QoS flow
11
12
13
14
15
Sending time
Second QoS flow
21
22
Receiving time
T1
T2
Preset duration
Latest sending moment
Actual budget
Packet budget
(b)
First QoS flow
11
12
13
14
15
Sending time
Second QoS flow
21
22
Receiving time
T1
T2
Preset duration
Latest sending moment
Actual budget
Packet budget
(c)

FIG. 4

Data transmission method 500
First network device
Second network device
S510: Obtain second information
S520: Second information

FIG. 5

First identifier 1
First identifier 2
11
12
13
14
15
First QoS flow
Receiving time
First identifier 1
First identifier 2
21
22
Second QoS flow
Receiving time
(a)
Second identifier
Second identifier
11
12
13
14
15
First QoS flow
Receiving time
21
22
Second QoS flow
Receiving time
(b)
11
12
13
14
15
First QoS flow
Receiving time
21
22
Second QoS flow
Receiving time
Association time period 1
Association time period 2
Association time period 3
Association time period 4
(c)

FIG. 6

Data transmission method 700
RAN
UPF
SMF
PCF
AF
S710: Service requirement
S720: PCC rule
S730: Indication information
S740: Synchronization requirement
S750: Determine an associated data packet
S760: Association relationship
S770: Synchronization scheduling

FIG. 7

Communication apparatus 800
Processor 810
Memory 840
Bus 830
Communication interface 820

FIG. 8

Communication apparatus 900
Transceiver unit 910
Processing unit 920
Storage unit 930

FIG. 9

Apparatus 1000
1010
Processor
1020
Memory
Computer program code
1030
Transceiver
Transmitter
1031
1032
Receiver
1033

FIG. 10

1133
Apparatus 1100
1130
1110
Transceiver
Processor
Transmitter
1131
1120
1132
Memory
Receiver
Computer
program code

FIG. 11

## INTERNATIONAL SEARCH REPORT

International application No.
**PCT/CN2024/119993**

**A. CLASSIFICATION OF SUBJECT MATTER**

H04N21/242(2011.01)i

According to International Patent Classification (IPC) or to both national classification and IPC

**B. FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS, CNKI, CNTXT, VEN, WOTXT, USTXT, EPTXT: 数据, 传输, 同步, 服务质量流, 发送, 接收, 时刻, 时长, 抖动, 关联, 标签, 用户面功能网元, 应用功能网元, 虚拟现实, 增强现实, 扩展现实, 元宇宙, data, transmission, synchronization, QoS, stream, send, receive, time, duration, jitter, relevance, tag, PDU, PSA, UPF, AF, VR, AR, XR, meta

**C. DOCUMENTS CONSIDERED TO BE RELEVANT**

| Category* | Citation of document, with indication, where appropriate, of the relevant passages | Relevant to claim No. |
|---|---|---|
| X | CN 116155875 A (HUAWEI TECHNOLOGIES CO., LTD.) 23 May 2023 (2023-05-23) description, paragraphs [0002]-[0318] | 1-7, 10-22, 25-29, 31, 34-41 |
| A | CN 116249101 A (HUAWEI TECHNOLOGIES CO., LTD.) 09 June 2023 (2023-06-09) entire document | 1-41 |
| A | CN 116097846 A (APPLE INC.) 09 May 2023 (2023-05-09) entire document | 1-41 |
| A | US 2018124656 A1 (OFINNO TECHNOLOGIES, LLC) 03 May 2018 (2018-05-03) entire document | 1-41 |

☐ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **02 December 2024** | **30 December 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/119993**

| Patent document cited in search report | Publication date (day/month/year) | Patent family member(s) | Publication date (day/month/year) |
|---|---|---|---|
| CN 116155875 A | 23 May 2023 | None | |
| CN 116249101 A | 09 June 2023 | None | |
| CN 116097846 A | 09 May 2023 | None | |
| US 2018124656 A1 | 03 May 2018 | US 10397836 B2 | 27 August 2019 |
| | | US 2021058832 A1 | 25 February 2021 |
| | | US 11564133 B2 | 24 January 2023 |
| | | US 2019380069 A1 | 12 December 2019 |
| | | US 10834643 B2 | 10 November 2020 |
| | | US 2023379768 A1 | 23 November 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202311454220